# EUROPEAN PATENT SPECIFICATION

(11) **EP 3 489 172 B1**
(45) Date of publication and mention of the grant of the patent: **02.08.2023**
(21) Application number: 17836643.1
(22) Date of filing: 26.06.2017
(51) Int. Cl.: B65G 1/137, B65G 59/00, G07F 11/04, A47F 7/00, G07F 11/12, G07F 9/02, G07F 11/16, G07G 1/00

(54) **DISPENSING DEVICE**
SPENDERVORRICHTUNG
DISPOSITIF DE DISTRIBUTION

(30) Priority: 05.08.2016 JP 2016154881
(43) Date of publication of application: 29.05.2019
(73) Proprietor: Japan Tobacco Inc., Tokyo 105-6927 (JP)
(72) Inventor: OIKAWA, Ayumu, Tokyo 105-8422 (JP)
(74) Representative: Hoffmann Eitle
(86) International application number: PCT/JP2017/023435
(87) International publication number: WO 2018/025536

(56) References cited:
- EP-A2- 1 360 658
- WO-A1-01/69554
- JP-A- H0 765 224
- JP-A- H08 263 732
- JP-A- H10 297 716
- JP-A- 2004 123 252
- JP-A- 2006 298 633
- US-A1- 2014 379 123

## Description

### TECHNICAL FIELD

The present invention relates to a dispensing device that automatically dispenses a tobacco commodity in response to a dispensing order.

### BACKGROUND ART

At stores such as general convenience stores, tobacco commodities of various brands are displayed according to their brands in a so-called store fixture, and a tobacco commodity may be purchased in such a manner that (1) when a purchaser designates a brand, a shop clerk selects the tobacco commodity of that brand from the store fixture or (2) a purchaser himself/herself takes out the tobacco commodity of the desired brand from the store fixture to purchase it. It should be noted that the tobacco commodity as used herein does not refer to an individual paper-wrapped cigarette to be burned but refers to a cuboid-shaped package that accommodates a plurality of paper-wrapped cigarettes or a cuboid-shaped package that accommodates other tobacco products as will be described later.

Also, Patent Documents 1 to 5 describe devices for automatically dispensing a tobacco commodity of a desired brand. These devices have a plurality of accommodation columns each accommodating tobacco commodities in a vertically stacked state, where one accommodation column is adapted to accommodate tobacco commodities of the same type (the same brand).

### CITATION LIST

### PATENT DOCUMENTS

PATENT DOCUMENT 1: Japanese Patent Application Laid Open No. 2011-207575
PATENT DOCUMENT 2: Japanese Patent Application Laid Open No. 2011-207576
PATENT DOCUMENT 3: Japanese Patent Application Laid Open No. 2011-207577
PATENT DOCUMENT 4: Japanese Patent Application Laid Open No. 2011-207578
PATENT DOCUMENT 5: Japanese Patent Application Laid Open No. 2011-209994
Document EP 1 360 658 A2 relates to an article handling apparatus embodied, for example, as a vending machine, that includes a controllably positioned hose dispenser for retrieving articles from an article storage area. A hose is continuous from a first end located within a hose storage area, where the hose receives article securing energy (e.g., suction), to a second end adapted to secure to and extract a selected article from the storage area. A hose positioning mechanism coupled to the hose controllably positions the second end of the hose so as to be aligned with a given article stored in the storage area, for controllably contacting and extracting the selected article from the storage area, and controllably positioning the second end of the hose so as to transport the article to a dispensing area.

### SUMMARY OF THE INVENTION

### PROBLEM TO BE SOLVED BY THE INVENTION

According to the techniques of Patent Documents 1 to 5, one accommodation column should accommodate tobacco commodities of the same brand, so that the space required for accommodating items of a lucrative brand may be as large as the space required for accommodating items of other brands which may not be lucrative, and thus there is room for improvement in terms of efficient use of spaces available.

The present invention has been made in view of the above-described problem and an object of the present invention is to provide a dispensing device capable of accommodating tobacco commodities of multiple types with higher accommodation efficiency.

Passage [0216] of this description discloses a vibration unit and its technical effects.

### MEANS FOR SOLVING THE PROBLEM

This object is achieved by the subject-matter of the independent claim 1. Advantageous embodiments are described in the dependent claims.

### EFFECT OF THE INVENTION

According to the present invention, since the identification information of the individual tobacco commodities is stored in association with the accommodation position information that differs from one tobacco commodity to another and the tobacco commodity of the type that corresponds to the dispensing order is dispensed with reference to the storage contents, it is made possible to selectively dispense a desired tobacco commodity even when tobacco commodities of multiple types exist in a mixed state.

In addition, since tobacco commodities of multiple types are allowed to exist in the accommodation unit in a mixed state, it is made possible to accommodate tobacco commodities of multiple types with higher accommodation efficiency.

### BRIEF DESCRIPTION OF THE DRAWINGS

[Fig. 1] Fig. 1 is a schematic cross-sectional front view illustrating a structure of a dispensing device according to the first embodiment.
[Fig. 2] Fig. 2 is a schematic cross-sectional plan view illustrating the structure of the dispensing device according to the first embodiment.
[Fig. 3] Fig. 3A, Fig. 3B, Fig. 3C, and Fig. 3D are schematic plan views illustrating takeout operation of a tobacco commodity from an accommodation column.
[Fig. 4] Fig. 4A, Fig. 4B, Fig. 4C, and Fig. 4D are schematic plan views illustrating the takeout operation of the tobacco commodity from the accommodation column.
[Fig. 5] Fig. 5A, Fig. 5B, and Fig. 5C are schematic side cross-sectional views illustrating the takeout operation of the tobacco commodity from the accommodation column.
[Fig. 6] Fig. 6A, Fig. 6B, and Fig. 6C are schematic side cross-sectional views illustrating the takeout operation of the tobacco commodity from the accommodation column.
[Fig. 7] Fig. 7A and Fig. 7B are schematic diagrams for explanation of a moving mechanism moves a conveying unit.
[Fig. 8] Fig. 8A and Fig. 8B are schematic cross-sectional front views illustrating delivery operation of the tobacco commodity from the conveying unit to a take-out slope.
[Fig. 9] Fig. 9 is a block diagram of the dispensing device according to the first embodiment.
[Fig. 10] Fig. 10 is a schematic cross-sectional front view for explanation of an example of operation of the dispensing device according to the first embodiment.
[Fig. 11] Fig. 11 is a schematic cross-sectional front view for explanation of an example of operation of the dispensing device according to the first embodiment.
[Fig. 12] Fig. 12A and Fig. 12B are schematic side cross-sectional views illustrating an accommodation column of the dispensing device according to the second embodiment.
[Fig. 13] Fig. 13 is a schematic front view illustrating an accommodation column of the dispensing device according to the third embodiment.
[Fig. 14] Fig. 14 is a schematic cross-sectional front view for explanation of the dispensing device according to the fourth embodiment.
[Fig. 15] Fig. 15 is a schematic cross-sectional front view for explanation of the dispensing device according to the fifth embodiment.
[Fig. 16] Fig. 16A, Fig. 16B, Fig. 16C, and Fig. 16D are schematic diagrams for explanation of the dispensing device according to the sixth embodiment.
[Fig. 17] Fig. 17A, Fig. 17B, Fig. 17C, and Fig. 17D are schematic diagrams for explanation of the dispensing device according to the seventh embodiment.
[Fig. 18] Fig. 18 is a schematic cross-sectional front view of the dispensing device according to the eighth embodiment.
[Fig. 19] Fig. 19 is a schematic cross-sectional front view of the dispensing device according to the eighth embodiment.
[Fig. 20] Fig. 20A, Fig. 20B, Fig. 20C, Fig. 20D, and Fig. 20E are schematic diagrams illustrating the takeout operation of the tobacco commodity from the accommodation column in the eighth embodiment.
[Fig. 21] Fig. 21 is a schematic cross-sectional plan view of the dispensing device according to the ninth embodiment.
[Fig. 22] Fig. 22 is a cross-sectional view taken along the line XXII-XXII of Fig. 21.
[Fig. 23] Fig. 23 is a schematic cross-sectional plan view of the dispensing device according to the tenth embodiment.
[Fig. 24] Fig. 24A and Fig. 24B are schematic side views of the dispensing device according to the eleventh embodiment.
[Fig. 25] Fig. 25 is a schematic cross-sectional front view of the dispensing device according to the twelfth embodiment.
[Fig. 26] Fig. 26 is a schematic front view illustrating a modified example of the accommodation column.

### DESCRIPTION OF EMBODIMENTS

The above-described and other objects, features and advantages will become more apparent from the following description of the preferred embodiments and the accompanying drawings.

Embodiments of the present invention will be described hereinbelow with reference to the drawings. In all the drawings, the similar components are denoted by the same reference numerals, and the description thereof will not be repeated.

### (First Embodiment)

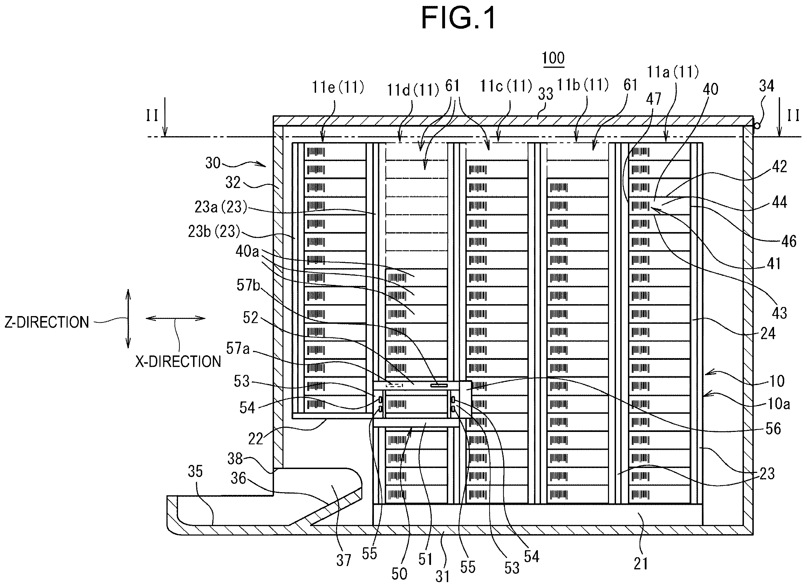

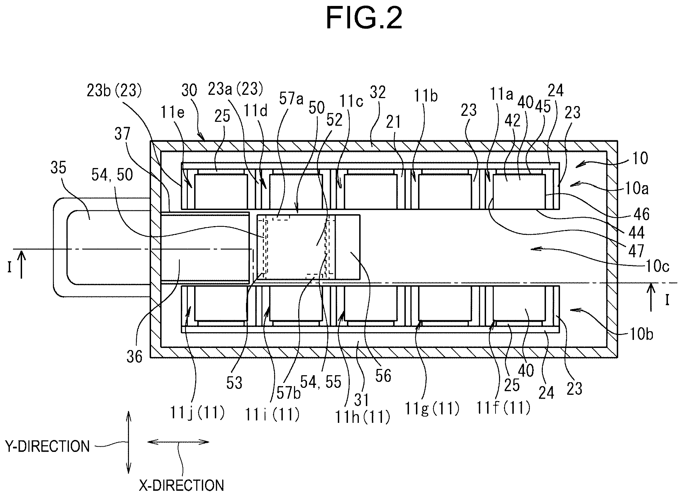

Figs. 1 and 2 are schematic diagrams that illustrate a structure of a dispensing device 100 according to the first embodiment. Fig. 1 is a cross-sectional front view and Fig. 2 is a cross-sectional plan view. Fig. 1 is a cross-sectional view taken along the line I-I of Fig. 2 and Fig. 2 is a cross-sectional view taken along the line II-II of Fig. 1.

In this embodiment, the left-right direction in Figs. 1 and 2 is referred to as an X-direction and the up-and-down direction (height direction) is referred to as a Z-direction. Also, the direction orthogonal to the X-direction and the Z-direction, in other words, the depth direction of the dispensing device 100 is referred to as a Y-direction.

Further, for the sake of simpler description of the positional relationship between the respective constituent components, there are cases where the front, rear, left, and right directions are defined for the sake of convenience. Specifically, unless otherwise indicated, the right side in Fig. 1 is referred to as right, the left side as left, the proximal side as front, and the distal side as rear. However, the positional relationship indicated in each drawing may be described in some cases.

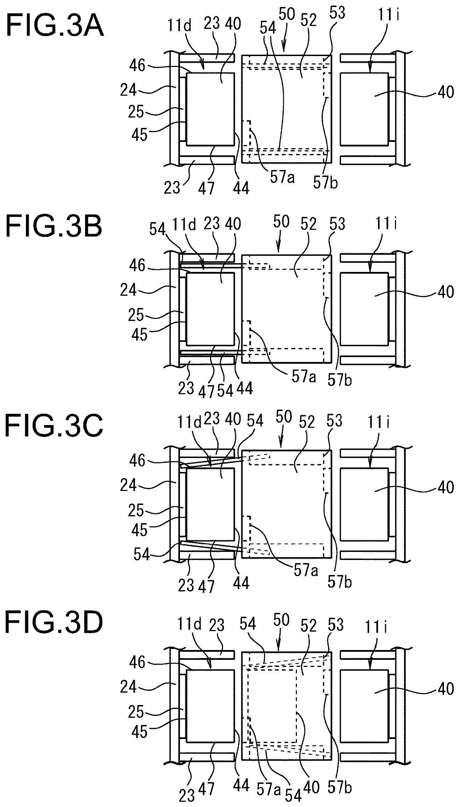

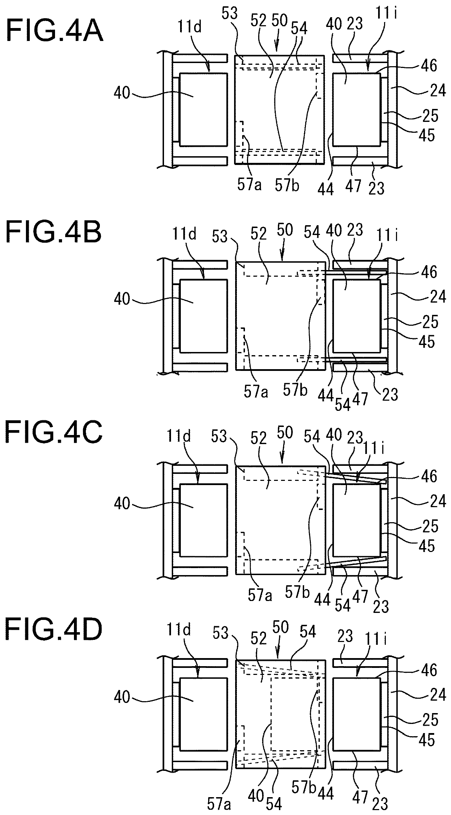

Fig. 3A, Fig. 3B, Fig. 3C, Fig. 3D, Fig. 4A, Fig. 4B, Fig. 4C, and Fig. 4D are schematic plan views illustrating takeout operation of a tobacco commodity 40 from an accommodation column 11 (for example, an accommodation column 11d or an accommodation column 11i) .

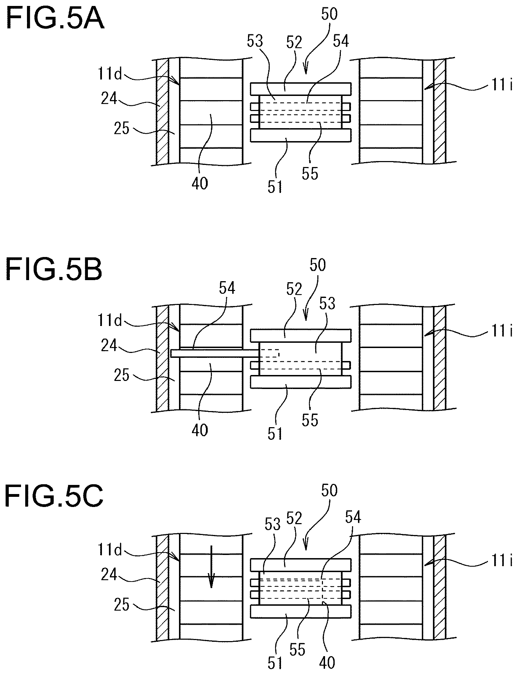

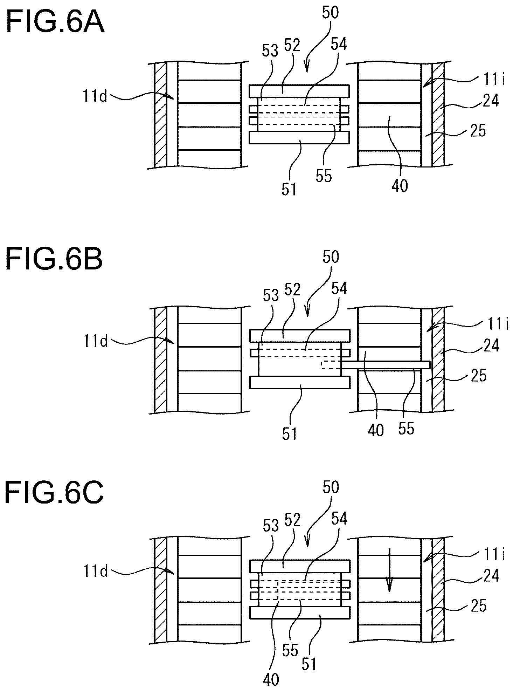

Fig. 5A, Fig. 5B, Fig. 5C, Fig. 6A, Fig. 6B, and Fig. 6C are schematic diagrams that illustrate the takeout operation of the tobacco commodity 40 from the accommodation column 11 (for example, the accommodation column 11d or the accommodation column 11i) and side cross-sectional views in which the dispensing device 100 is viewed from the left side.

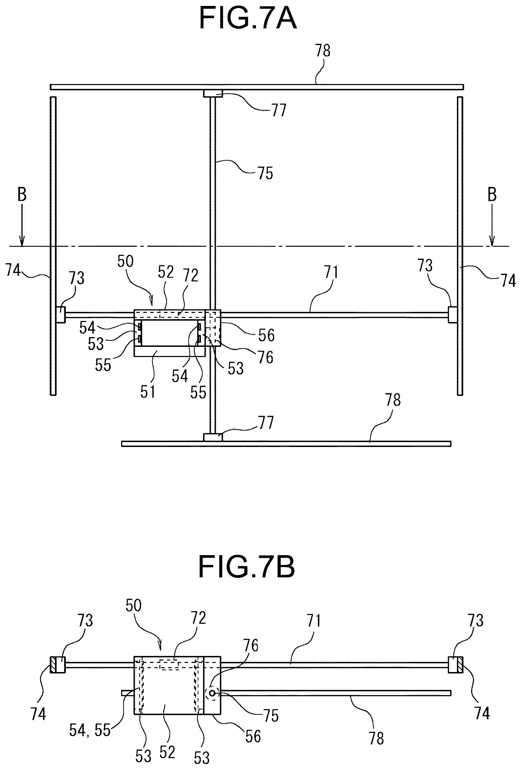

Fig. 7A and Fig. 7B are schematic diagrams for explanation of a moving mechanism that moves a conveying unit 50, where Fig. 7A is a front view and Fig. 7B is a cross-sectional view taken along the line B-B of Fig. 7A.

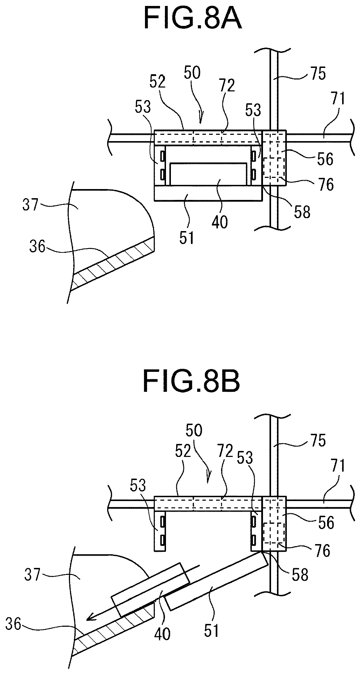

Fig. 8A and Fig. 8B are schematic cross-sectional front views that illustrate delivery (dispensing) operation of the tobacco commodity 40 from the conveying unit 50 to a take-out slope 36.

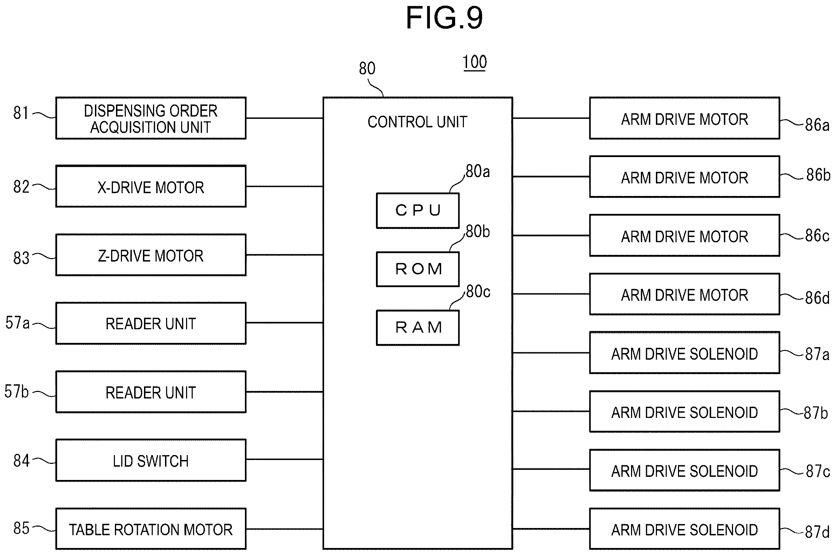

Fig. 9 is a block diagram of the dispensing device 100 according to the first embodiment.

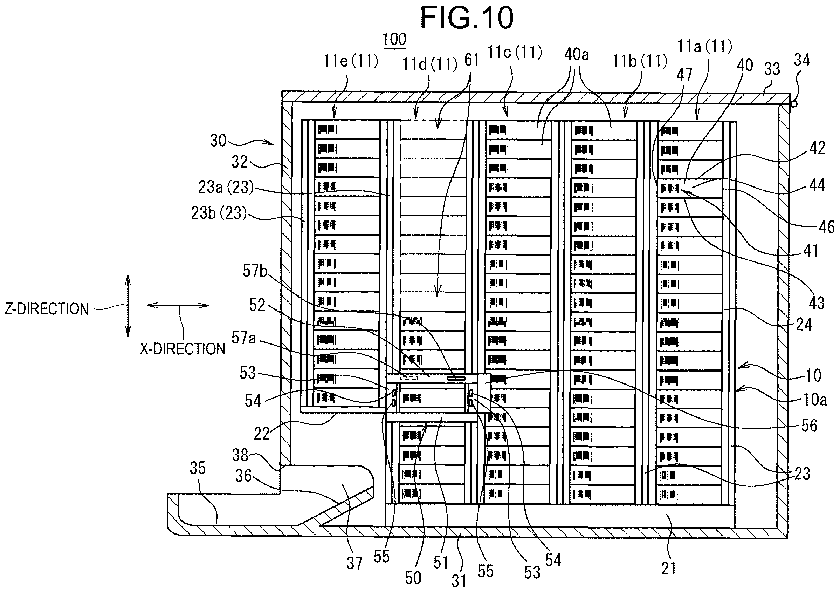

Fig. 10 is a schematic cross-sectional front view for explanation of an example of operation of the dispensing device 100 according to the first embodiment.

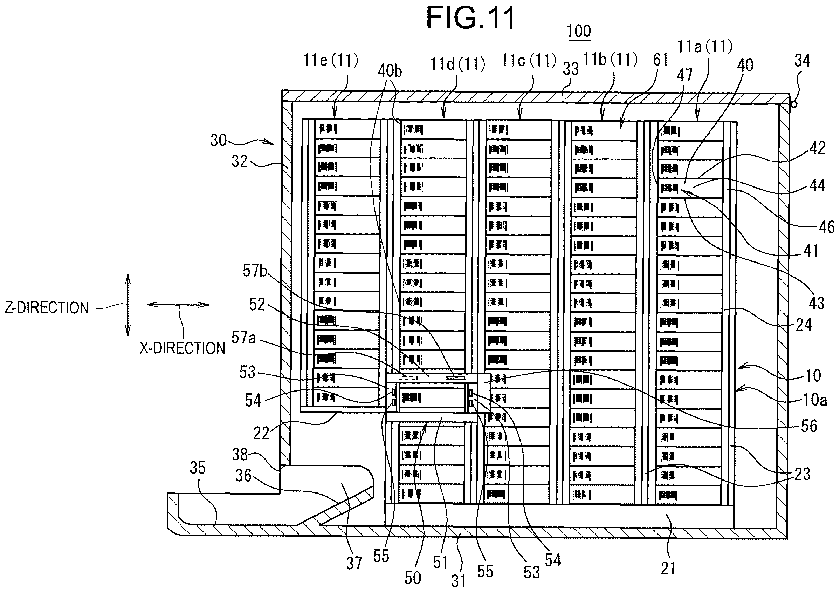

Fig. 11 is a schematic cross-sectional front view for explanation of an example of operation of the dispensing device 100 according to the first embodiment.

It should be noted that the various constituent components of the present invention do not need to be a component that is independent from other components and may encompass a case where one constituent component is part of another constituent component, a case where part of a certain constituent component also constitutes part of another constituent component, and other relevant cases.

The dispensing device 100 according to this embodiment includes an accommodation unit 10 accommodating tobacco commodities 40 of multiple types in a mixed state, reader units 57a, 57b reading identification information from the individual tobacco commodities 40, a storage unit (for example, a RAM 80c illustrated in Fig. 9) storing the identification information of the individual tobacco commodities 40 in association with accommodation position information that differ from one tobacco commodity 40 to another, and a dispenser mechanism (conveying unit 50) referring to the stored contents of the storage unit and dispensing from the accommodation unit 10 the tobacco commodity 40 of the type corresponding to a dispensing order.

Here, the tobacco commodity 40 does not refer to an individual paper-wrapped cigarette to be burned but refers to a cuboid-shaped package that accommodates a plurality of paper-wrapped cigarettes or a cuboid-shaped package that accommodates other tobacco products other than paper-wrapped cigarettes. As the other tobacco products, snuff tobacco, pipe tobacco, and related items such as a suction tool used in combination with the other tobacco products may be mentioned.

The tobacco commodity 40 has a rectangular first main surface 42, a rectangular second main surface 43 facing and extending in parallel with the first main surface 42, and has a first side surface 44, a second side surface 45, a first end surface 46 and a second end surface 47 each of which has a rectangular shape.

The first side surface 44 is arranged along one long side of the first main surface 42 and one long side of the second main surface 43 and is orthogonal to the first main surface 42 and the second main surface 43.

The second side surface 45 is arranged along the other long side of the first main surface 42 and the other long side of the second main surface 43 and is orthogonal to the first main surface 42 and the second main surface 43 and oriented in parallel with the first side surface 44.

The first end surface 46 is arranged along one short side of the first main surface 42 and one short side of the second main surface 43 and is orthogonal to the first main surface 42, the second main surface 43, the first side surface 44, and the second side surface 45.

The second end surface 47 is arranged along the other short side of the first main surface 42 and the other short side of the second main surface 43, and is orthogonal to the first main surface 42, the second main surface 43, the first side surface 44, and the second side surface 45 and oriented in parallel with the first end surface 46.

Here, the identification information is information specific to a type of the tobacco commodity 40 (i.e., brand) and the type (brand) of the tobacco commodity 40 can be identified on the basis of the identification information. In the case of this example, the identification information is a barcode 41 indicated on the outer surface of the package of the tobacco commodity 40. The barcode 41 is indicated, for example, on the first side surface 44.

It should be noted that to store the identification information means storing of the information obtained by reading the barcode 41 using the reader units 57a, 57b and is not limited to storing of the barcode 41 as such.

Also, the accommodation position information corresponds to the individual tobacco commodities 40 accommodated in the accommodation unit 10 in a one-to-one correspondence relationship.

In the case of this embodiment, the accommodation unit 10 includes an accommodation column 11 that accommodates multiple tobacco commodities 40 in a vertically stacked state. Here, to accommodate multiple tobacco commodities 40 in a vertically stacked state means stacking multiple tobacco commodities 40 in a state where each pair of the tobacco commodities 40 adjacent to each other in the vertical direction are in contact with each other and accommodating the multiple tobacco commodities 40 in this state.

It should be noted that the dispensing device 100 is configured to accommodate the tobacco commodities 40 of multiple types in a mixed state even in one single accommodation column 11. As a result, the accommodation position information includes height position information of the individual tobacco commodities 40.

In the case of this embodiment, the accommodation unit 10 is configured to include a plurality of the accommodation columns 11 arranged at different locations from each other in the horizontal direction.

As a result, the accommodation position information includes, in addition to the height position information, horizontal position information indicative of the position of the tobacco commodity 40 in the horizontal direction.

In the case of this embodiment, the accommodation unit 10 has, as illustrated in Fig. 2, two rows of the accommodation columns 11.

Specifically, the accommodation unit 10 includes, for example, a first column row 10a and a second column row 10b each having five accommodation columns 11 aligned in the X-direction, where the first column row 10a and the second column row 10b are arranged so as to be parallel to each other.

Here, as illustrated in Figs. 1 and 2, the dispensing device 100 has a housing 30 and the accommodation unit 10 is arranged inside the housing 30.

The housing 30 is configured to include a horizontally arranged bottom plate section 31, a side wall section 32 standing upright from the peripheral portion of the bottom plate section 31, and a top plate section 33 horizontally provided at the upper end of the top plate section 33.

The shape of the housing 30 is not limited to a particular one and the housing 30 is formed, for example, in a cuboidal shape. Specifically, for example, the bottom plate section 31 and the top plate section 33 are each formed in a rectangular shape in their plan view to be opposite to each other. Also, the side wall section 32 is formed in a rectangular shape in its plan view and surrounds the four sides of the region of the interval where the bottom plate section 31 and the top plate section 33 are opposed to each other.

Here, the dispensing device 100 in use is installed in a convenience store or any other store. In a normal state, no clerk at the store or customer coming to the store is capable of access the tobacco commodities 40 accommodated in the accommodation unit 10 inside the housing 30.

In the case of this embodiment, restocking of the accommodation unit 10 with the tobacco commodities 40 is manually performed by an operator (typically, a clerk). A certain portion of the housing 30 defines an opening/closing section (opening/closing lid or opening/closing door) that is operable to be opened and closed. By opening the opening/closing section, the internal space of the housing 30 is opened to the outside so that a state is entered where the accommodation unit 10 can be restocked with the tobacco commodities 40.

In the case of this embodiment, the top plate section 33 defines the opening/closing lid. As illustrated in Fig. 1, one end of the top plate section 33 (for example, its right end) is connected by means of a hinge unit 34 to the upper end of the side wall section 32 and the top plate section 33 is configured to be pivotable about the hinge unit 34 as a fulcrum. When the top plate section 33 is taken out of the state of Fig. 1 and opened about the hinge unit 34 as the fulcrum in a clockwise direction, the upper end of the housing 30 is opened so that the accommodation unit 10 can be restocked with the tobacco commodities 40 from above the housing 30.

It should be noted that a not-shown lock is preferably provided in the opening/closing section such that the opening/closing section is placed in a locked state where it cannot be opened.

For example, a take-out opening 38 for taking out the tobacco commodity 40 from the inside of the housing 30 to the outside is formed at the lower portion of the one side in the X-direction (for example, the left side) of the housing 30.

For example, a take-out slope 36 is formed at the location inside the take-out opening 38 in the housing 30. The take-out slope 36 is configured such that, the tobacco commodity 40 to be dispensed moves downward via the take-out opening 38 to the outside of the housing 30.

For example, a slope sidewall 37 standing upright from the take-out slope 36 is formed on both sides in the width direction of the take-out slope 36.

For example, a take-out saucer 35 that receives the tobacco commodity 40 that has been moved downward on the take-out slope 36 is provided on the outer portion of the take-out opening 38.

A clerk can take out the tobacco commodity 40 dispensed onto the take-out saucer 35 from the take-out saucer 35 to sell the tobacco commodity 40.

As illustrated in Figs. 1 and 2, the first column row 10a includes, for example, a plate-like support base 21 horizontally arranged on the bottom plate section 31 and a plurality of partition walls 23 standing upright from the support base 21.

In the case of this embodiment, five partition walls 23 arranged in parallel with each other at equal intervals are provided so as to stand upright from the support base 21. And four accommodation columns 11a, 11b, 11c, and 11d are each formed between corresponding one of the pairs of the partition walls 23.

These accommodation columns 11a, 11b, 11c, and 11d are each configured to be capable of accommodating a multiple number of the tobacco commodities 40. Specifically, a multiple number of the tobacco commodities 40 can be placed on the support base 21 in each of the accommodation columns 11a, 11b, 11c, and 11d.

The number of the tobacco commodities 40 that can be accommodated in each of the accommodation columns 11a, 11b, 11c, and 11d varies depending on the thickness dimension of the tobacco commodity 40 (the distance between the first main surface 42 and the second main surface 43) and, for example, in the case of a tobacco commodity 40 of a standard dimensions, twenty tobacco commodities 40 can be accommodated in each of the accommodation columns 11a, 11b, 11c, and 11d.

It should be noted that the leftmost partition wall 23 (partition wall 23a) among the five partition walls 23 standing upright from the support base 21 is positioned, for example, on the right side of the take-out slope 36.

Further, the first column row 10a includes a plate-like support base 22 provided on the partition wall 23a and a partition wall 23 (partition wall 23b) standing upright from the support base 22.

The support base 22 is extended horizontally from the portion of the partition wall 23a that is higher than the slope sidewall 37 toward the left side and is positioned above the slope sidewall 37.

The partition wall 23b stands upright from the left end of the support base 22 so as to be opposed to the partition wall 23a. The height dimension of the partition wall 23b is smaller than the height dimension of the other partition walls 23, and the upper end position of the partition wall 23b is flush with the upper end position of the other partition walls 23.

One accommodation column 11 (accommodation column 11e) is formed between the partition wall 23a and the partition wall 23b.

It should be noted that the number of the tobacco commodities 40 that can be accommodated in the accommodation column 11e is, for example, 15 in the case where the tobacco commodity 40 is of standard dimensions.

Hence, in the case of this embodiment, it is possible to accommodate a total of 95 tobacco commodities 40 in the first column row 10a.

The dimension of the internal space of each accommodation column 11 in the X-direction, i.e., the opposing interval between the two adjacent partition walls 23 is specified to be larger than the longitudinal dimension of the standard tobacco commodity 40 (the length of the long side of the first main surface 42 and the second main surface 43, i.e., the distance between the first end surface 46 and the second end surface 47).

Also, the dimension in the Y-direction of each partition wall 23 (depth dimension) is specified, for example, to be larger than the width dimension of a standard tobacco commodity 40 (the length of the short side of the first main surface 42 and the second main surface 43, i.e., the distance between the first side surface 44 and the second side surface 45).

As illustrated in Fig. 2, the first column row 10a further includes a sidewall 24 standing upright from the support base 21 in a state where it is orthogonal to each partition wall 23. The sidewall 24 has dimensions covering the entire region of the first column row 10a in the X-direction and the Z-direction and closes the rear end of each accommodation column 11 included in the first column row 10a.

Each accommodation column 11 of the first column row 10a has an opened front side so that the tobacco commodity 40 can be taken out via the front side.

Further, the first column row 10a includes a spacer section 25 provided on the sidewall 24 for each accommodation column 11. The spacer section 25 is provided on the surface of the sidewall 24 on the side of the accommodation column 11. The up-and-down dimension of the spacer section 25 is specified to be equal to the up-and-down dimension of the accommodation column 11, and the spacer section 25 is provided so as to extend from the lower end to the upper end of the accommodation column 11.

The dimension in the X-direction of the spacer section 25 is specified to be smaller than the longitudinal dimension of a standard tobacco commodity 40. The spacer section 25 is arranged at an intermediate position between two adjacent partition walls 23 and is spaced away from each partition wall 23.

The first column row 10a has the above-described configuration and includes, for example, the five accommodation columns 11a, 11b, 11c, 11d, and 11e.

Also, the second column row 10b has the same or similar structure as that of the first column row 10a and includes five accommodation columns 11f, 11g, 11h, 11i, and 11j.

The second column row 10b is arranged in front-back symmetry to the first column row 10a. Specifically, as illustrated in Fig. 2, the first column row 10a is arranged on the distal side and the second column row 10b is arranged on the proximal side, and the first column row 10a and the second column row 10b are arranged so as to face each other.

More specifically, the accommodation column 11a and the accommodation column 11f are opposed to each other, the accommodation column 11b and the accommodation column 11g are opposed to each other, the accommodation column 11c and the accommodation column 11h are opposed to each other, the accommodation column 11d and the accommodation column 11i are opposed to each other, and the accommodation column 11e and the accommodation column 11j are opposed to each other.

In this manner, the accommodation unit 10 includes a total of ten accommodation columns 11 and is capable of accommodating, for example, up to 190 tobacco commodities 40.

In the case of this embodiment, a dispenser mechanism which dispenses from the accommodation unit 10 the tobacco commodity 40 of the type corresponding to a dispensing order is configured to include a conveying unit 50 that is movable relative to the accommodation unit 10 and configured to take out the tobacco commodity 40 from the accommodation unit 10 and convey the tobacco commodity 40.

The region of the interval where the second column row 10b and the first column row 10a face with each other defines a movement area 10c in which the conveying unit 50 moves.

The conveying unit 50 is configured to move in the X-direction and the Z-direction in the movement area 10c by a moving mechanism which will be described later.

Here, it is assumed that the tobacco commodity 40 is to be accommodated in each of the accommodation columns 11 of the first column row 10a by an operator such that the first main surface 42 of the tobacco commodity 40 is oriented upward, the second main surface 43 is oriented downward, the first side surface 44 is oriented toward the proximal side, the second side surface 45 is oriented toward the distal side, the first end surface 46 is oriented rightward, and the second end surface 47 is oriented leftward.

Meanwhile, it is assumed that the tobacco commodity 40 is to be accommodated in each of the accommodation columns 11 of the second column row 10b by an operator such that the first main surface 42 of the tobacco commodity 40 is oriented upward, the second main surface 43 is oriented downward, the first side surface 44 is oriented toward the distal side, the second side surface 45 is oriented toward the proximal side, the first end surface 46 is oriented leftward, and the second end surface 47 is oriented rightward.

Specifically, the tobacco commodity 40 is to be accommodated in each of the accommodation columns 11 such that the first side surface 44 of each tobacco commodity 40 is oriented toward the movement area 10c.

The conveying unit 50 is configured to be capable of selectively taking out the tobacco commodity 40 accommodated in the accommodation unit 10. In the case of this example, the conveying unit 50 is configured to take out the tobacco commodity 40 using a pair of arms (a pair of first arm units 54, or a pair of second arm units 55) to hold the tobacco commodity 40 between them.

The conveying unit 50 includes, for example, a table-like section 51 that can support the tobacco commodity 40 that has been taken out, a ceiling section 52 positioned above the table-like section 51, a pair of (left and right) side wall sections 53, and a Z-direction moving unit 56.

The ceiling section 52 is formed, for example, in a shape of a plate and, as will be described later, arranged horizontally by being supported by the moving mechanism.

The right side wall section 53 is fixed to the right end of the ceiling section 52 and extends downward from the right end of the ceiling section 52 in a pendent fashion.

The Z-direction moving unit 56 is fixed to the right side surface of the right side wall section 53. The Z-direction moving unit 56 is supported by the moving mechanism which will be described later.

The table-like section 51 is formed, for example, in a shape of a plate and arranged horizontally in a normal state.

As illustrated in Fig. 8A, in a normal state, the ceiling section 52 and the table-like section 51 face with each other so as to be parallel to each other, and the interval where the ceiling section 52 and the table-like section 51 faces with each other is specified to be wider than the thickness dimension of the tobacco commodity 40. Also, the interval where the left and right side wall sections 53 faces with each other is specified to be wider than the longitudinal dimension of the tobacco commodity 40. Also, for example, the front-rear dimensions of the ceiling section 52 and the table-like section 51 are specified to be wider than the width dimension of the tobacco commodity 40 (see Fig. 3D, Fig. 4D, Fig. 5C, and Fig. 6C).

As illustrated in Fig. 8A and Fig. 8B, the right end of the table-like section 51 is pivotally supported by the hinge unit 58 with respect to the lower end of the right side wall section 53, and is configured to be rotatable downward (counterclockwise in Fig. 8A).

The left side wall section 53 is supported by the left end of the ceiling section 52 and extends downward from the left end of the ceiling section 52 in a pendent fashion.

Here, a rotation mechanism that rotates the table-like section 51 relative to the side wall section 53 is provided in the table-like section 51 or the side wall section 53. The rotation mechanism is configured to include a table rotation motor 85 (Fig. 9) and a transmission mechanism that transmits the rotation of the motor shaft of the table rotation motor 85 to the table-like section 51 to rotate the table-like section 51 relative to the side wall section 53.

When the motor shaft of the table rotation motor 85 rotates in one direction, the table-like section 51 is rotated counterclockwise in Fig. 8A and the state of Fig. 8B is entered.

Also, when the motor shaft of the table rotation motor 85 rotates in an inverse direction, then the table-like section 51 is rotated clockwise in Fig. 8B and the state of Fig. 8A is restored.

As illustrated in Figs. 1 and 2, a reader unit 57a that reads the barcode 41 of the tobacco commodity 40 of the first column row 10a is provided at the rear part of the ceiling section 52. Specifically, the reader units 57a, 57b are provided in the conveying unit 50.

The reader unit 57a is configured to optically read the barcode 41 and is exposed to the outside on the rear surface of the ceiling section 52.

The reader unit 57a that reads the barcode 41 of the tobacco commodity 40 of the second column row 10b is provided at the front part of the ceiling section 52. The reader unit 57a is configured to optically read the barcode 41 and is exposed to the outside on the rear surface of the ceiling section 52.

Further, the conveying unit 50 includes, for example, a pair of (left and right) first arm units 54 that selectively take out one tobacco commodity 40 from the first column row 10a and a pair of (left and right) second arm units 55 that selectively take out one tobacco commodity 40 from the second column row 10b.

The pair of first arm units 54 are each formed, for example, in a shape of an elongated plate that extends in the front-rear direction. One first arm unit 54 of the pair of first arm units 54 is held by the right side wall section 53 and the other first arm unit 54 is held by the left side wall section 53. The pair of first arm units 54 are arranged at the same height with each other.

Likewise, the pair of second arm units 55 are each formed, for example, in a shape of an elongated plate that extends in the front-rear direction. One second arm unit 55 of the pair of second arm units 55 is held by the right side wall section 53 and the other second arm unit 55 is held by the left side wall section 53. The pair of second arm units 55 are arranged at the same height with each other.

As illustrated in Fig. 1, the first arm unit 54 and the second arm unit 55 are arranged at different heights so that the first arm unit 54 and the second arm unit 55 do not interfere with each other. For example, each first arm unit 54 is provided at the upper part of each side wall section 53 and each second arm unit 55 is provided at the lower part of the side wall section 53.

As illustrated in Fig. 3A and Fig. 5A, in normal states, the pair of first arm units 54 and the pair of second arm units 55 are accommodated in the left and right side wall sections 53. It should be noted that, in the accommodated state illustrated in Fig. 3A and Fig. 5A, the front end and the rear end of the first arm unit 54 as well as those of the second arm unit 55 may protrude from the side wall section 53 or may not protrude therefrom.

A first arm drive mechanism is provided in each of the left and right side wall sections 53. The first arm drive mechanism is configured to perform the operation (Fig. 3B, Fig. 5B) of causing the first arm unit 54 to protrude rearward (leftward in Fig. 3A, Fig. 5A) and the operation (Fig. 3D, Fig. 5C) of causing the first arm unit 54 that has been made to protrude to be accommodated again in the side wall section 53.

Specifically, by one of the respective first arm drive mechanisms, the forward and backward movements of the corresponding one of the first arm unit 54 are performed.

The first arm drive mechanism is configured to include, for example, a motor, and a drive transmission mechanism configured by a gear or the like that transmits the motor driving force to the first arm unit 54.

More specifically, for example, the arm drive motor 86a illustrated in Fig. 9 and a not-shown drive transmission mechanism are provided in the left side wall section 53. When the motor shaft of the arm drive motor 86a rotates in one direction, the left-side first arm unit 54 is made to protrude rearward (Fig. 3B, Fig. 5B). When the motor shaft of the arm drive motor 86a rotates in the inverse direction, the left-side first arm unit 54 is again accommodated in the left side wall section 53 (Fig. 3D, Fig. 5C).

Likewise, for example, the arm drive motor 86b illustrated in Fig. 9 and a not-shown drive transmission mechanism are provided in the right side wall section 53. When the motor shaft of the arm drive motor 86b rotates in one direction, the right-side first arm unit 54 is thereby made to protrude rearward (Fig. 3B, Fig. 5B). When the motor shaft of the arm drive motor 86b rotates in the inverse direction then the right-side first arm unit 54 is again accommodated in the right side wall section 53 (Fig. 3D, Fig. 5C).

The operations of the arm drive motor 86a, 86b driving the corresponding one of the pair of first arm units 54 are performed in synchronization with each other and the pair of first arm units 54 move forward and backward in synchronization with each other.

Further, a first arm swing mechanism is provided in each of the left and right side wall sections 53. The first arm swing mechanisms are configured to perform the operation (Fig. 3C) of swinging the respective first arm units 54 on a horizontal plane in a direction where the distal ends (rear ends) of the first arm units 54 that have been made to protrude are moved to be close to each other and the operation (the operation from Fig. 3C to Fig. 3A) of restoring the first arm units 54 that have been made to swing to their original positions.

Specifically, by the first arm swing mechanisms, the opening and closing operations of the pair of first arm units 54 are performed.

The first arm swing mechanism is configured to include, for example, a spring that biases the first arm unit 54 in one orientation in the swing direction and a solenoid that attracts the first arm unit 54 in the reverse orientation in the swing direction against the biasing of the spring.

More specifically, for example, the arm drive solenoid 87a illustrated in Fig. 9 and a not-shown spring are provided in the left side wall section 53. When the arm drive solenoid 87a is actuated, the left-side first arm unit 54 swings against the biasing of the spring and the distal end of the left-side first arm unit 54 is moved to be close to the distal end of the right-side first arm unit 54 (Fig. 3C). Also, when the arm drive solenoid 87a stops its actuation, the left-side first arm unit 54 swings according to the biasing of the spring and the distal end of the left-side first arm unit 54 is moved away from the distal end of the right-side first arm unit 54 (Fig. 3A).

Likewise, for example, the arm drive solenoid 87b illustrated in Fig. 9 and a not-shown spring are provided in the right side wall section 53. When the arm drive solenoid 87b is actuated, the right-side first arm unit 54 swings against the biasing of the spring and the distal end of the right-side first arm unit 54 is moved to be close to the distal end of the left-side first arm unit 54 (Fig. 3C). Also, when the arm drive solenoid 87b stops its actuation, the right-side first arm unit 54 swings according to the biasing of the spring and the distal end of the right-side first arm unit 54 is moved away from the distal end of the left-side first arm unit 54(Fig. 3A).

The operations of the arm drive solenoids 87a, 87b causing the corresponding one of the pair of first arm units 54 to swing are performed in synchronization with each other and the pair of first arm units 54 is opened and closed in synchronization with each other.

Also, a second arm drive mechanism is provided in each of the left and right side wall sections 53. The second arm drive mechanism is configured to perform the operation (Fig. 4B, Fig. 6B) of causing the second arm unit 55 to protrude frontward (to the right side in Fig. 4A, Fig. 6A) and the operation (Fig. 4D, Fig. 6C) of causing the second arm unit 55 that has been made to protrude to be accommodated again by the side wall section 53.

Specifically, by each second arm drive mechanism, forward and backward movements of the corresponding second arm unit 55 are performed.

The second arm drive mechanism is, for example, the same or similar one as the first arm drive mechanism and is configured to include a motor and a drive transmission mechanism configured by a gear or the like that transmits the motor driving force to the second arm unit 55.

More specifically, for example, the arm drive motor 86c illustrated in Fig. 9 and a not-shown drive transmission mechanism are provided in the left side wall section 53. When the motor shaft of the arm drive motor 86c rotates in one direction, the left second arm unit 55 protrudes frontward (Fig. 4B, Fig. 6B). When the motor shaft of the arm drive motor 86c rotates in the reverse direction, the left second arm unit 55 is accommodated again in the left side wall section 53 (Fig. 4D, Fig. 6C).

Likewise, for example, the arm drive motor 86d illustrated in Fig. 9 and a not-shown drive transmission mechanism are provided in the right side wall section 53. When the motor shaft of the arm drive motor 86d rotates in one direction, the right second arm unit 55 protrudes frontward (Fig. 4B, Fig. 6B). When the motor shaft of the arm drive motor 86d rotates in the reverse direction, the right second arm unit 55 is accommodated again in the right side wall section 53 (Fig. 4D, Fig. 6C).

The operations of the arm drive motor 86c, 86d each driving the corresponding one of the pair of second arm units 55 are performed in synchronization with each other and the pair of second arm units 55 are moved forward and backward in synchronization with each other.

Further, a second arm swing mechanism is provided in each of the left and right side wall sections 53. The second arm swing mechanism is configured to perform the operation (Fig. 4C) of causing each second arm unit 55 to swing on a horizontal plane in a direction where the distal ends (front ends) of the second arm units 55 that have been made to protrude are moved to be close to each other and the operation (the operation from Fig. 4C to Fig. 4A) of restoring the second arm unit 55 that have been made to swing to its original position.

Specifically, by the second arm swing mechanisms, the opening and closing operations of the pair of second arm units 55 are performed.

The second arm swing mechanism is, for example, the same or similar one as the first arm swing mechanism and configured to include a spring that biases the second arm unit 55 in one orientation of the swing direction and a solenoid that attracts the second arm unit 55 against the biasing of the spring in the reverse orientation in the swing direction.

More specifically, for example, the arm drive solenoid 87c illustrated in Fig. 9 and a not-shown spring are provided in the left side wall section 53 and, when the arm drive solenoid 87c is actuated, the left second arm unit 55 swings against the biasing of the spring, and the distal end of the left second arm unit 55 is moved to be close to the distal end of the right second arm unit 55 (Fig. 4C). Also, when the arm drive solenoid 87c stops its actuation, the left second arm unit 55 swings according to the biasing of the spring, and the distal end of the left second arm unit 55 is moved to be away from the distal end of the right second arm unit 55 (Fig. 4A).

Likewise, for example, the arm drive solenoid 87d illustrated in Fig. 9 and a not-shown spring are provided in the right side wall section 53. When the arm drive solenoid 87d is actuated, the right second arm unit 55 swings against the biasing of the spring, and the distal end of the right second arm unit 55 is moved to be close to the distal end of the left second arm unit 55 (Fig. 4C). Also, when the arm drive solenoid 87d stops its actuation, the right second arm unit 55 swings according to the biasing of the spring, and the distal end of the right second arm unit 55 is moved to be away from the distal end of the left second arm unit 55 (Fig. 4A).

The operations of the arm drive solenoids 87c, 87d each causing the corresponding one of the pair of second arm units 55 to swing are performed in synchronization with each other, and the pair of second arm units 55 are configured to be opened and closed in synchronization with each other.

Also, the moving mechanism that moves the conveying unit 50 in the X-direction and the Z-direction is configured, for example, as described below.

As illustrated in Fig. 7A or Fig. 7B, the moving mechanism includes a first ball screw 71, a first rotation unit 72, a pair of first moving blocks 73, a pair of first guide rails 74, a second ball screw 75, a second rotation unit 76, a pair of second moving blocks 77, and a pair of second guide rails 78.

The one first guide rail 74 of the pair of first guide rails 74 is fixed, for example, to the inner surface of the let wall section in the side wall section 32 and extends in the Z-direction (up-and-down direction). Also, the other first guide rail 74 is fixed, for example, to the inner surface of the right wall section in the side wall section 32 and extends in the Z-direction. The pair of first guide rails 74 are both arranged at the same position in the depth direction (Y-direction).

The one first moving block 73 is provided in the one first guide rail 74, and the first moving block 73 is configured to be slidable in the longitudinal direction of the first guide rail 74.

Likewise, the other first moving block 73 is provided in the other first guide rail 74, and the first moving block 73 is configured to be slidable in the longitudinal direction of the first guide rail 74.

The first ball screw 71 extends in the X-direction (extends horizontally) and extends through the ceiling section 52 of the conveying unit 50 and the Z-direction moving unit 56 in the X-direction. The left end of the first ball screw 71 is fixed to the one first moving block 73 and the right end of the first ball screw 71 is fixed to the other first moving block 73. By virtue of this, the first ball screw 71 is provided between and bridges the pair of first moving blocks 73.

Also, the first rotation unit 72 is in threaded engagement with the first ball screw 71. The first rotation unit 72 is held by the ceiling section 52 and is configured to be rotatable relative to the ceiling section 52 about the rotation axis extending in the X-direction.

The one second guide rail 78 of the pair of second guide rails 78 is fixed, for example, to the upper surface of the bottom plate section 31 and extends in the X-direction (left-right direction). Also, the other second guide rail 78 is provided between and bridges, for example, the inner surface of the left wall section of the side wall section 32 and the inner surface of the right wall section of the side wall section 32 in the vicinity of the top plate section 33, and extends in the X-direction (left-right direction). The pair of second guide rails 78 are arranged at the same position with each other in the depth direction(Y-direction).

The one second moving block 77 is provided in the one second guide rail 78 and the second moving block 77 is configured to be slidable in the longitudinal direction of the second guide rail 78.

Likewise, the other second moving block 77 is provided in the other second guide rail 78 and the second moving block 77 is configured to be slidable in the longitudinal direction of the second guide rail 78.

The second ball screw 75 extends in the Z-direction (extends vertically), and extends through the Z-direction moving unit 56 in the Z-direction. The lower end of the second ball screw 75 is fixed to the one second moving block 77 and the upper end of the second ball screw 75 is fixed to the other second moving block 77. By virtue of this, the second ball screw 75 is provided between and bridges the pair of second moving blocks 77.

Also, the second rotation unit 76 is in threaded engagement with the second ball screw 75. The second rotation unit 76 is held by the Z-direction moving unit 56 and is configured to be rotatable relative to the Z-direction moving unit 56 about the rotation axis extending in the Z-direction.

It should be noted that the pair of first guide rails 74 and the pair of second guide rails 78 are arranged at different positions from each other in the depth direction and, for example, the first guide rail 74 is arranged to be closer to the distal side than the second guide rail 78.

More specifically, the first ball screw 71 is arranged to be closer to the distal side than the second rotation unit 76 such that the second rotation unit 76 and the first ball screw 71 do not interfere with each other (Fig. 7B).

Further, the moving mechanism includes an X-drive motor 82 (Fig. 9) configured to rotate the first rotation unit 72 in one direction and the reverse direction, a transmission mechanism configured to transmit the rotation of the X-drive motor 82 to the first rotation unit 72, a Z-drive motor 83 (Fig. 9) configured to rotate the second rotation unit 76 in one direction and the reverse direction, and a transmission mechanism configured to transmit the rotation of the Z-drive motor 83 to the second rotation unit 76.

When the motor shaft of the X-drive motor 82 rotates in the one direction, the first rotation unit 72 is rotated in one direction relative to the ceiling section 52. By virtue of this, the first rotation unit 72 threadedly advances in one direction (for example, leftward) with respect to the first ball screw 71 and thereby the conveying unit 50 is moved leftward.

Also, when the motor shaft of the X-drive motor 82 rotates in the reverse direction, the first rotation unit 72 is rotated in the reverse direction with respect to the ceiling section 52. By virtue of this, the first rotation unit 72 threadedly advances in the reverse direction (for example, rightward) with respect to the first ball screw 71 and thereby the conveying unit 50 is moved rightward.

When the motor shaft of the Z-drive motor 83 rotates in the one direction, the second rotation unit 76 is rotated in one direction relative to the Z-direction moving unit 56. By virtue of this, when the second rotation unit 76 threadedly advances in one direction (for example, upward) relative to the second ball screw 75, the conveying unit 50 is elevated.

Also, when the motor shaft of the Z-drive motor 83 rotates in the reverse direction, the second rotation unit 76 is rotated in the reverse direction relative to the Z-direction moving unit 56. By virtue of this, when the second rotation unit 76 threadedly advances in the reverse direction (for example, downward) relative to the second ball screw 75, the conveying unit 50 is lowered.

It should be noted that, in a case where the direction of movement of the conveying unit 50 extends obliquely (a case where the line interconnecting the position before the movement and the position after the movement is inclined), the rotation of the X-drive motor 82 and the rotation of the Z-drive motor 83 may be sequentially performed. However, when the rotations are performed in parallel with each other, it is made possible to move the conveying unit 50 along the shortest path and thus shorten the time required to move the conveying unit 50.

As illustrated in Fig. 9, the dispensing device 100 includes a control unit 80 configured to comprehensively control the operation of the individual units of the dispensing device 100.

Specifically, the control unit 80 is configured to control the operations of the X-drive motor 82, the Z-drive motor 83, the reader units 57a, 57b, the table rotation motor 85, the arm drive motors 86a, 86b, 86c, 86d, and the arm drive solenoids 87a, 87b, 87c, 87d.

The control unit 80 is configured to include a ROM 80b that stores control program, a CPU 80a that carries out the control operation in accordance with the control program, and a RAM 80c functioning as a work area for the CPU 80a or the like.

The identification information read by the reader units 57a, 57b is input to the control unit 80. The CPU 80a associates each piece of the identification information of each tobacco commodity 40 with each piece of the accommodation position information that differs from one tobacco commodity 40 to another and stores these pieces of information in the RAM 80c.

Here, as described above, the accommodation position information is configured to include, for example, the height position information and the horizontal position information.

The height position information may be Z-coordinate information indicative of the coordinate in the height direction (i.e., the Z-coordinate which is the coordinate in the Z-direction) and may be tier number information indicative of the specific tier of position in the accommodation column 11.

As the Z-coordinate information, for example, information indicative of the Z-coordinate of the conveying unit 50 at the time of reading of the barcode 41 by the reader unit 57a or 57b, or the coordinate having a predetermined correlation with the Z-coordinate can be used.

Also, the reader units 57a, 57b may be configured to be capable of optically recognizing the boundary position between the tobacco commodities 40 vertically stacked in the accommodation column 11. It should be noted that the conveying unit 50 may include a camera so that the boundary position between the tobacco commodities 40 vertically stacked in the accommodation column 11 may be recognizable based on the imaging result of the camera.

In this case, the intermediate position of the upper and lower ends of each tobacco commodity 40 can be obtained as the height position information of each tobacco commodity 40 on the basis of the boundary position of two vertically stacked tobacco commodities 40.

Also, the horizontal position information may be column information indicative of the accommodation column 11 in which the tobacco commodity 40 is accommodated. It may also be information indicative of the coordinate of the tobacco commodity 40 in the horizontal direction. Specifically, the horizontal position information may include X-coordinate information indicative of the X-coordinate which is the coordinate of the tobacco commodity 40 in the X-direction.

As the horizontal position information, for example, information indicative of the X-coordinate of the conveying unit 50 at the time of reading of the barcode 41 by the reader unit 57a or 57b or the coordinate having a predetermined correlation with the X-coordinate can be used. Meanwhile, these pieces of information are not sufficient for identifying whether or not the tobacco commodity 40 is accommodated in one accommodation column 11 or the other of the mutually facing accommodation columns 11 whose coordinates are indicated. Therefore, the horizontal position information includes information indicative of whether or not the X-coordinate corresponds to the one that is associated with a case where the barcode 41 has been read by the reader unit 57a or another case where the barcode 41 has been read by the reader unit 57b.

Further, the dispensing device 100 includes a dispensing order acquisition unit 81.

The dispensing order acquisition unit 81 is, for example, an operation unit provided on the outer surface of the housing 30, an operation tablet provided at a location away from the housing 30, or the like.

When a clerk or a purchaser of the tobacco commodity 40 performs a predetermined operation on the dispensing order acquisition unit 81, the brand of the tobacco commodity 40 that the purchaser is going to purchase is allowed to be designated.

It should be noted that, by the operation on the dispensing order acquisition unit 81, the brands of the various tobacco commodities 40 are allowed to be searched for and designated, for example, by various search schemes such as alphabetical search, brand name search, tar value search, and nicotine value search. Alternatively, personal authentication information (information authenticated by voiceprint authentication, vein authentication, reading of a recording medium, or the like) for the purchaser may be used to identify the purchaser and search for the brand of the item that was previously purchased.

Here, the fact that the brand of the tobacco commodity 40 that the purchaser purchases is designated by the operation on the dispensing order acquisition unit 81 is described as the fact that the dispensing order acquisition unit 81 acquires a dispensing order. The dispensing order acquired by the dispensing order acquisition unit 81 is notified from the dispensing order acquisition unit 81 to the control unit 80.

Further, the dispensing device 100 includes a lid switch 84 configured to detect whether or not the top plate section 33 is closed. Specifically, the lid switch 84 is configured to detect the fact that the top plate section 33 is closed or the fact that the top plate section 33 is opened.

The result of the detection by the lid switch 84 is input at any time to the control unit 80 and the control unit 80 constantly monitors whether or not the top plate section 33 is closed.

Next, the operation of dispensing the tobacco commodity 40 by the dispensing device 100 according to this embodiment will be described.

When the dispensing order is input from the dispensing order acquisition unit 81 to the control unit 80, the control unit 80 refers to the storage contents of the RAM 80c and determine whether or not the tobacco commodity 40 of the type (brand) corresponding to the dispensing order is accommodated in the accommodation unit 10.

If it is not accommodated therein, then it is not possible to dispense the tobacco commodity 40 that corresponds to the dispensing order. In this case, the control unit 80 may provide notification that the dispensing of the tobacco commodity 40 is not possible by using a not-shown notification unit.

If it is accommodated therein, then the control unit 80 reads the accommodation position information of the tobacco commodity 40 of the type that corresponds to the dispensing order. It should be noted that in a case where a plurality of tobacco commodities 40 of the type that corresponds to the dispensing order are accommodated in the accommodation unit 10, the control unit 80 reads the accommodation position information of the tobacco commodity 40 that was accommodated first (at the earliest timing) in the accommodation unit 10 among them.

Further, the control unit 80 performs operation control on the X-drive motor 82 and the Z-drive motor 83 so as to move the conveying unit 50 toward the position corresponding to the accommodation position information that has been read.

It should be noted that, the tobacco commodity 40 of the type that corresponds to the dispensing order may be referred to as the tobacco commodity 40 to be dispensed.

In the following, the operation is explained by way of two separate cases, i.e., a case where the tobacco commodity 40 to be dispensed is accommodated in the accommodation column 11 of the first column row 10a (for example, the accommodation column 11d) and the other case where the tobacco commodity 40 to be dispensed is accommodated in the accommodation column 11 of the second column row 10b (for example, the accommodation column 11i).

In the case where the tobacco commodity 40 to be dispensed is accommodated in the accommodation column 11d, as illustrated in Fig. 3A and Fig. 5A, the conveying unit 50 is moved to the position that is in front of the accommodation column 11d and corresponds to the tobacco commodity 40 of the type that corresponds to the dispensing order.

In addition, under the control of the control unit 80, the reader unit 57a reads the barcode 41 of the tobacco commodity 40 to be dispensed. Specifically, the reader unit 57a reads the barcode 41 of the tobacco commodity 40 residing at the position identified by the accommodation position information that has been read by the control unit 80.

Further, the control unit 80 determines whether or not the barcode 41 that has been read by the reader unit 57a agrees with the dispensing order.

If it is in agreement, then, in the manner as described below, under the control of the control unit 80, the tobacco commodity 40 to be dispensed is taken out by the conveying unit 50 from the accommodation column 11d.

First, as illustrated in Fig. 3B and Fig. 5B, the pair of first arm units 54 protrude rearward from the side wall section 53 and are inserted into the accommodation column 11d.

Here, as illustrated in Fig. 3B, the distal end of the first arm unit 54 is configured to be inserted into the gap between the spacer section 25 and the partition wall 23.

Next, as illustrated in Fig. 3C, the pair of first arm units 54 swing in the direction in which their distal ends become close to each other, and the tobacco commodity 40 to be dispensed is held between the pair of first arm units 54.

Next, as illustrated in Fig. 3D, the pair of first arm units 54 are accommodated again in the side wall section 53. At this point, the tobacco commodity 40 held by the pair of first arm units 54 is taken out from the accommodation column 11d and, further, is taken into the region of interval where the table-like section 51 and the ceiling section 52 faces with each other.

It should be noted that withdrawal of the tobacco commodity 40 by the pair of first arm units 54 is performed after the distal ends of the pair of first arm units 54 have been inserted into the gap between the spacer section 25 and the partition wall 23 as described above. By virtue of this, it is made possible to take out the tobacco commodity 40 in a state where the tobacco commodity 40 is stably held by the pair of first arm units 54 and more reliably take the tobacco commodity 40 into the region of interval where the table-like section 51 and the ceiling section 52 faces with each other.

Here, as illustrated in Fig. 5B, etc., the table-like section 51 and the ceiling section 52 protrude more rearward than the side wall section 53. In addition, the height position of the table-like section 51 is aligned with the tobacco commodity 40 adjacent to lower side of the tobacco commodity 40 to be dispensed whereas the height position of the ceiling section 52 is aligned with the tobacco commodity 40 adjacent to upper side of the tobacco commodity 40 to be dispensed.

As a result, when the tobacco commodity 40 to be dispensed is taken out from the accommodation column 11d, moving of the tobacco commodities 40 adjacent to this tobacco commodity 40 above and below it can be suppressed by the ceiling section 52 and the table-like section 51, so that it is made possible to suppress the upper and lower adjacent tobacco commodities 40 from being taken out.

After the tobacco commodity 40 to be dispensed has been taken into the region of interval where the table-like section 51 and the ceiling section 52 faces with each other, the distal ends of the pair of first arm units 54 are opened, whereby as illustrated in Fig. 5C, the tobacco commodity 40 drops onto the table-like section 51 and is thus placed in the state where it is supported by the table-like section 51.

Subsequently, the conveying unit 50 is moved to the dispensing position illustrated in Fig. 8A.

Subsequently, as illustrated in Fig. 8B, when the table-like section 51 rotates downward, the tobacco commodity 40 to be dispensed is delivered from the table-like section 51 to the take-out slope 36 and goes down on the take-out slope 36 to be dispensed onto the take-out saucer 35.

Hence, a clerk can take out the tobacco commodity 40 to be dispensed from the take-out saucer 35 to sell it.

It should be noted that if the barcode 41 that was read when the conveying unit 50 had moved to the position corresponding to the tobacco commodity 40 of the type that corresponds to the dispensing order as in Fig. 3A and Fig. 5A does not agree with the dispensing order, then the control unit 80 may provide notification that the dispensing of the tobacco commodity 40 is not possible by using a not-shown notification unit, or dispensing of the (second oldest) tobacco commodity 40 that was accommodated in the accommodation unit 10 at the second earliest timing among the tobacco commodities 40 accommodated in the accommodation unit 10 and having the type that corresponds to the dispensing order may be performed by the conveying unit 50.

Meanwhile, if the tobacco commodity 40 to be dispensed is accommodated in the accommodation column 11i, then, as illustrated in Fig. 4A and Fig. 6A, the conveying unit 50 is moved to the position on the rear side of the accommodation column 11i which is the position corresponding to the tobacco commodity 40 of the type that corresponds to the dispensing order.

In addition, under the control of the control unit 80, the reader unit 57b reads the barcode 41 of the tobacco commodity 40 to be dispensed. Specifically, the reader unit 57b reads the barcode 41 of the tobacco commodity 40 residing at the position identified by the accommodation position information that has been read by the control unit 80.

Further, the control unit 80 determines whether or not the barcode 41 that has been read by the reader unit 57b agrees with the dispensing order.

If it is in agreement, then, in the manner described below, under the control of the control unit 80, the tobacco commodity 40 to be dispensed is withdrawn up from the accommodation column 11i by the conveying unit 50.

First, as illustrated in Fig. 4B and Fig. 6B, the pair of second arm units 55 protrude frontward from the side wall section 53 and are inserted into the accommodation column 11i.

Here, as illustrated in Fig. 4B, the distal end of the second arm unit 55 is to be inserted into the gap between the spacer section 25 and the partition wall 23.

Next, as illustrated in Fig. 4C, the pair of second arm units 55 swing in the direction where their distal ends are moved close to each other, and the tobacco commodity 40 to be dispensed is held by the pair of second arm units 55.

Next, as illustrated in Fig. 4D, the pair of second arm units 55 are accommodated again in the side wall section 53. At this point, the tobacco commodity 40 held by the pair of second arm units 55 is taken out from the accommodation column 11i and, further, is taken into the region of interval where the table-like section 51 and the ceiling section 52 faces with each other.

Since withdrawal of the tobacco commodity 40 by the pair of second arm units 55 is performed after the distal end of the pair of second arm units 55 have been inserted into the gap between the spacer section 25 and the partition wall 23 as described above, it is made possible to take out the tobacco commodity 40 in a state where the tobacco commodity 40 is stably held by the pair of second arm units 55 and more reliably take the tobacco commodity 40 into the region of interval where the table-like section 51 and the ceiling section 52 faces with each other.

Here, as illustrated in Fig. 6B, etc., the table-like section 51 and the ceiling section 52 protrude more frontward than the side wall section 53. In addition, the height position of the table-like section 51 is aligned with the tobacco commodity 40 adjacent to lower side of the tobacco commodity 40 to be dispensed whereas the height position of the ceiling section 52 is aligned with the tobacco commodity 40 adjacent to upper side of the tobacco commodity 40 to be dispensed.

As a result, when the tobacco commodity 40 to be dispensed is taken out from the accommodation column 11i, moving of the tobacco commodities 40 adjacent to this tobacco commodity 40 above and below it can be suppressed by the ceiling section 52 and the table-like section 51, so that it is made possible to suppress the upper and lower adjacent tobacco commodities 40 from being taken out.

After the tobacco commodity 40 to be dispensed has been taken into the region of interval where the table-like section 51 and the ceiling section 52 faces with each other, the distal ends of the pair of second arm units 55 are opened, whereby as illustrated in Fig. 6C, the tobacco commodity 40 drops onto the table-like section 51 and is thus placed in the state where it is supported by the table-like section 51.

Subsequently, the conveying unit 50 moves to the dispensing position illustrated in Fig. 8A and, as illustrated in Fig. 8B, when the table-like section 51 rotates downward, the tobacco commodity 40 to be dispensed is delivered from the table-like section 51 to the take-out slope 36 and, goes down on the take-out slope 36 to be dispensed onto the take-out saucer 35. Hence, a clerk can take out the tobacco commodity 40 to be dispensed from the take-out saucer 35 to sell it.

It should be noted that, if the barcode 41 that was read when the conveying unit 50 had moved to the position corresponding to the tobacco commodity 40 of the type that corresponds to the dispensing order as in Fig. 4A and Fig. 6A does not agree with the dispensing order, then the control unit 80 may provide notification that the dispensing of the tobacco commodity 40 is not possible by using a not-shown notification unit, or dispensing of the (second oldest) tobacco commodity 40 that was accommodated in the accommodation unit 10 at the second earliest timing among the tobacco commodities 40 accommodated in the accommodation unit 10 and having the type that corresponds to the dispensing order may be performed by the conveying unit 50.

Also, when the tobacco commodity 40 to be dispensed has been taken out from the accommodation column 11 as described above, then the tobacco commodities 40 that were stacked on the tobacco commodity 40 that has been taken out are shifted downward by one tier. As a result, the control unit 80 performs the update processing to update the accommodation position information stored in the RAM 80c.

The update processing may be processing for changing the height position information through arithmetic operation by the known thickness of the individual tobacco commodities 40 or may be processing for re-acquiring the height position information of all the tobacco commodities 40 that were positioned above the tobacco commodity 40 to be dispensed.

Also, the conveying unit 50 in the idling time in which dispensing of the tobacco commodity 40 is not performed should preferably be configured to move the tobacco commodities 40 in the accommodation unit 10 as will be described below to create a situation where restocking of tobacco commodities 40 in the accommodation unit 10 together at one time is facilitated.

For example, as illustrated in Fig. 1, let us consider a case where empty spaces 61 exist in each of a plurality of the accommodation columns 11. Here, empty spaces 61 corresponding to two tobacco commodities 40 exist in the accommodation column 11b, an empty space 61 corresponding to one tobacco commodity 40 exists in the accommodation column 11c, and empty spaces 61 corresponding to seven tobacco commodities 40 exist in the accommodation column 11d. Accordingly, a total of ten empty spaces 61 exist in the accommodation unit 10.

In this case, the conveying unit 50 performs the operation of, for example, taking out sequentially the top three tobacco commodities 40a among the tobacco commodities 40 accommodated in the accommodation column 11d to move them to the accommodation column 11b or the accommodation column 11c.

As a result, as illustrated in Fig. 10, ten empty spaces 61 that continuously reside in the vertical direction will be created in the accommodation column 11d.

As described above, the accommodation unit 10 includes the first accommodation unit (for example, the accommodation column 11d) and the second accommodation unit (for example, the accommodation column 11b or the accommodation column 11c), and the dispensing device 100 includes the moving mechanism (conveying unit 50) that moves the tobacco commodity 40 from the first accommodation unit to the second accommodation unit. It should be noted that in the case of this embodiment, the dispenser mechanism also functions as the moving mechanism.

In addition, the accommodation column 11 is configured to accommodate the tobacco commodities 40 in a vertically stacked sate, and the dispensing device 100 includes the moving mechanism (conveying unit 50). The moving mechanism (conveying unit 50) is configured to move a tobacco commodity 40 to another accommodation position such that a plurality of accommodation positions in an empty state (empty spaces 61) are placed in a vertically successively arranged state in one accommodation column 11 (for example, the accommodation column 11d) in a case where there are multiple accommodation positions (empty space 61; Fig. 1) in an empty state exist in the accommodation unit 10. It should be noted that, in this embodiment, the dispenser mechanism also functions as the moving mechanism.

More specifically, the moving mechanism moves the tobacco commodities 40 to another accommodation position such that a state is entered where the accommodation positions in an empty state in one accommodation column 11 are continuously arranged by a predetermined number (for example, 10) in the vertical direction.

In addition, ten successive empty spaces 61 as illustrated in Fig. 10 are created in one single accommodation column 11 (for example, the accommodation column 11d) and thus it is made possible to restock a carton of the tobacco commodities 40 at a time in the accommodation column 11.

Fig. 11 illustrates a state where the tobacco commodities 40 (tobacco commodities 40b) are respectively restocked in the empty spaces 61 illustrated in Fig. 10.

Here, at the phase where the accommodation unit 10 has been restocked with the tobacco commodities 40b, the accommodation position information of these tobacco commodities 40b are yet to be stored in the RAM 80c. Accordingly, it is not possible to handle these tobacco commodities 40b as the target items to be dispensed.

Specifically, the dispensing device 100 is configured to selectively dispense only those tobacco commodities 40 whose accommodation position information have already been stored.

When the top plate section 33 is closed after the tobacco commodities 40b have been restocked in the accommodation unit 10, then the lid switch 84 detects the closure of it and the control unit 80 recognizes the closure. Then, the control unit 80 moves the conveying unit 50 to cause the reader unit 57a or 57b to read (scan) the barcode 41 of the tobacco commodity 40b.

Specifically, the control unit 80, for example, causes the conveying unit 50 to scan the entire yet-to-be-scanned regions in the accommodation unit 10 and read the barcode 41 of the tobacco commodity 40b.

The control unit 80 recognizes each tobacco commodity 40b as already-scanned tobacco commodity 40 every time the identification information obtained by reading the barcode 41 of each tobacco commodity 40b is stored in the RAM 80c.

When each tobacco commodity 40b can now be handled as already-scanned tobacco commodity 40, it is made possible to handle the tobacco commodity 40b as the target item to be dispensed.

It should be noted that if the dispensing order is issued while the barcode 41 is being scanned by the conveying unit 50, the scanning operation is suspended and the dispensing processing to dispense the tobacco commodity 40 corresponding to the dispensing order is performed as interrupt processing.

In addition, when the dispensing operation is completed, the scanning operation will be resumed.

Also, the scanning operation can be performed sequentially, for example, starting from the lowest-tier yet-to-be-scanned region. Specifically, for example, among the ten tobacco commodities 40b illustrated in Fig. 11, reading of the barcode 41 and the storage of the identification information that has been read are performed sequentially starting from the lowest-tier tobacco commodity 40b.

It should be noted that, in a case where the scanning is performed on all the yet-to-be-scanned regions in the accommodation unit 10 every time the top plate section 33 is closed as in this embodiment, an operator can randomly fill the empty space 61 that is empty at the time of opening of the top plate section 33 with the tobacco commodity 40b.

According to the first embodiment described above, the dispensing device 100 includes the accommodation unit 10 that accommodates the tobacco commodities 40 of multiple types in a mixed state, the reader units 57a, 57b that read the identification information from the individual tobacco commodities 40, the storage unit (the RAM 80c) that stores each piece of the identification information of each of the tobacco commodities 40 in association with each piece of the accommodation position information differing from one tobacco commodity 40 to another, and the dispenser mechanism (conveying unit 50) that refers to the storage contents of the storage unit and dispenses from the accommodation unit 10 the tobacco commodity 40 of the type corresponding to the dispensing order.

Hence, even when tobacco commodities 40 of multiple types exist in a mixed state, the desired tobacco commodity 40 can be selectively dispensed. In addition, since tobacco commodities of different types are allowed to reside in a mixed state in the accommodation unit 10, it is made possible to accommodate the tobacco commodities 40 of multiple types with higher accommodation efficiency.

It should be noted that in the above-described first embodiment, an example has been described where the barcode 41 is checked immediately before the tobacco commodity 40 to be dispensed is taken out from the accommodation column 11, but the confirmation of the barcode 41 at this phase may be omitted.

### (Second Embodiment)

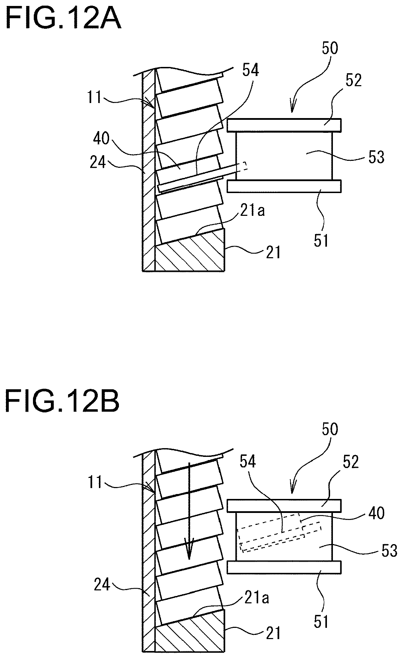

Fig. 12A and Fig. 12B are schematic side cross-sectional views that illustrate the accommodation column 11 of the dispensing device according to the second embodiment.

The dispensing device according to this embodiment differs from the dispensing device 100 according to the first embodiment in the aspects described below. In the description of the dispensing device according to this embodiment, the common features as those of the dispensing device 100 according to the first embodiment will not be repeatedly explained.

As illustrated in Fig. 12A and Fig. 12B, in the case of this embodiment, the accommodation column 11 has a support section (upper surface 21a of the support base 21) configured to support in an inclined state the lowest-tier tobacco commodity 40 among the vertically stacked tobacco commodities 40 and a sidewall 24 that restrict the tobacco commodity 40 from falling downward in a direction of the inclination.

In addition, as illustrated in Fig. 12B, the tobacco commodity 40 corresponding to the dispensing order is taken out by the dispenser mechanism (conveying unit 50) from the accommodation column 11 from an upper side of the inclination (from the right side in Fig. 12A).

More specifically, as illustrated in Fig. 12B, the dispenser mechanism (conveying unit 50) is configured to take out the tobacco commodity 40 that corresponds to the dispensing order from the accommodation column 11 in an ascending direction of the above-mentioned inclination.

For example, the upper surface 21a of the support base 21 defines an inclined slope that descends toward the left side of Fig. 12A and Fig. 12B. It should be noted that the support section is not limited to the one that supports the tobacco commodity 40 by way of its surface and may be other ones that support it by way of multiple points thereof.

The first arm unit 54 is disposed so as to incline upward to the right in Fig. 12A and Fig. 12B, and is configured to be movable (frontward and backward) in the longitudinal direction of the first arm unit 54 by means of the first arm drive mechanism.

By virtue of this, the dispenser mechanism (conveying unit 50) can extract the tobacco commodity 40 from the accommodation column 11 in the upward direction of the above inclination.

It should be noted that the present invention is not limited to this example and the dispenser mechanism (conveying unit 50) may horizontally take out the tobacco commodity 40 from the accommodation column 11 in the same manner as in the first embodiment and thus the tobacco commodity 40 may be taken out from the accommodation column 11 from the upper side of the above-mentioned inclination (from the right side in Fig. 12A).

According to this embodiment, it is made possible to suppress the tobacco commodities 40 in the accommodation column 11 from being unpiled toward the conveying unit 50 when the tobacco commodity 40 is taken out from the accommodation column 11.

Also, in this embodiment, the sidewall 24 may be inclined in the opposite direction with respect to the direction in which the tobacco commodity 40 is taken out from the accommodation column 11. Specifically, in Fig. 12A and Fig. 12B, the sidewall 24 may be inclined leftward. By this configuration, it is made possible to more reliably suppress the tobacco commodities 40 in the accommodation column 11 from being unpiled toward the conveying unit 50 when the tobacco commodity 40 is taken out from the accommodation column 11.

It should be noted that, as illustrated in Fig. 12B, after the tobacco commodity 40 has been taken out from the accommodation column 11, in the same manner as in the first embodiment, the tobacco commodity 40 may be supported by the table-like section 51 by releasing the holding of the tobacco commodity 40 by the pair of first arm units 54.

While Fig. 12A and Fig. 12B illustrate only the first arm unit 54 that takes out the tobacco commodity 40 positioned on one side of the conveying unit 50, a second arm unit 55 may be included that takes out a tobacco commodity 40 positioned on the opposite side of the conveying unit 50.

It should be noted that an example has been described in the second embodiment where the tobacco commodity 40 that corresponds to the dispensing order is taken out from the accommodation column 11. Meanwhile, in a case where multiple tobacco commodities 40 are supported in a vertically stacked state on the support base 21 having an upper surface 21a inclined as illustrated in Fig. 12A, when the tobacco commodity 40 is moved in the accommodation unit 10, the tobacco commodity 40 may be taken out from the accommodation column 11 by the moving mechanism (conveying unit 50) from the upper side of the inclination (from the right side in Fig. 12A).

Specifically, the accommodation unit 10 includes the first accommodation unit (the accommodation column 11 illustrated in Fig. 12A, Fig. 12B) and the second accommodation unit (for example, the other accommodation column 11), and the dispensing device 100 includes the moving mechanism (conveying unit 50) that moves the tobacco commodity 40 from the first accommodation unit to the second accommodation unit, where the first accommodation unit is the accommodation column 11 that accommodates the tobacco commodities 40 in a vertically stacked state, and the accommodation column 11 has the support section (the upper surface 21a of the support base 21) that supports the lowest-tier tobacco commodity in an inclined state among the vertically stacked tobacco commodities 40, and the sidewall 24 that suppress the tobacco commodity 40 from falling downward in the direction of the inclination, and the tobacco commodity 40 may be taken out from the accommodation column 11 by the moving mechanism (conveying unit 50) from the upper side of the inclination.

Further, in this case as well, the moving mechanism (conveying unit 50) may be configured to take out the tobacco commodity 40 from the accommodation column 11 in an ascending direction of the above-mentioned inclination.

### (Third Embodiment)

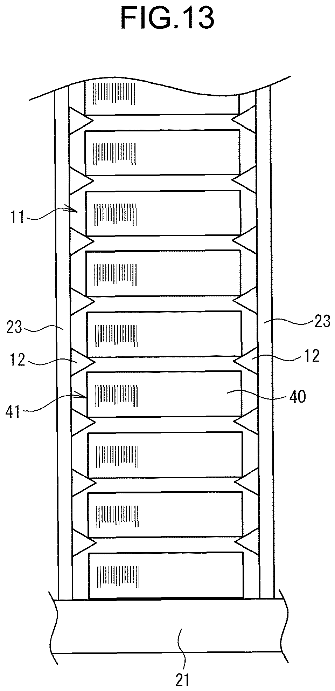

Fig. 13 is a schematic front view that illustrates the accommodation column 11 of the dispensing device according to the third embodiment.

The dispensing device according to this embodiment differs from the dispensing device 100 according to the first embodiment in the aspects described below. In the description of the dispensing device according to this embodiment, the common features as those of the dispensing device 100 according to the first embodiment will not be repeatedly explained.

In the case of this embodiment, the accommodation unit includes the accommodation column 11 that accommodates the tobacco commodities 40 in a vertical direction at intervals. Accordingly, the accommodation position information includes the height position information of the individual tobacco commodities 40.

More specifically, the accommodation column 11 has support sections 12 in multiple tiers each configured to support one or more tobacco commodities 40.

The support sections 12 are provided as pairs thereof including a right one and a left one and, for example, a pair of the support sections 12 are provided on the partition wall 23 on both sides of the accommodation column 11 so as to protrude in the accommodation column 11. The support section 12 has a shape whose thickness decreases toward the distal side (toward more inward portion of the accommodation column 11) and, for example, is formed in a triangular shape in its front view.

In the case of this embodiment, the interval between the upper and lower support sections 12 adjacent to each other corresponds to the thickness dimension of one single tobacco commodity 40 so that one single tobacco commodity 40 (individual items) is supported by the support section 12. Specifically, the lowest-tier tobacco commodity 40 is supported by the upper surface of the support base 21 while the second tobacco commodity 40 from the bottom and subsequent tobacco commodities 40 are supported by the support sections 12 of the respective tiers.

Meanwhile, the present invention is not limited to this example and the interval between the upper and lower support sections 12 adjacent to each other may correspond to the thickness dimension of two or more tobacco commodities 40 so that multiple tobacco commodities 40 as a unit group of the tobacco commodities 40 in a stacked state are supported by the support section 12.

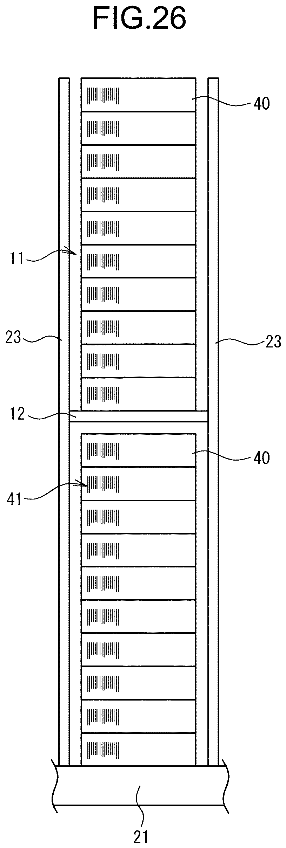

Further, in this case, as in the accommodation column 11 of the modified example illustrated in Fig. 26, the support section 12 may be a plate-like partition provided so as to bridge between the partition walls 23 on both sides of the accommodation column 11. In the example of Fig. 26, an example is illustrated in which ten tobacco commodities 40 are accommodated below the support section 12 and, another ten tobacco commodities 40 are accommodated on the support section 12.

According to this embodiment, there is no tobacco commodity 40 stacked on each tobacco commodity 40 or the number of the tobacco commodities 40 stacked on each tobacco commodity 40 can be reduced, so that it is made possible to suppress the frictional resistance upon withdrawal of the tobacco commodity 40 from the accommodation column 11 and suppress deformation (collapse) of the tobacco commodity 40 due to the weight of the stacked tobacco commodities 40.

Also, in particular, in a case where individual tobacco commodities 40 are supported by the support section 12, no change occurs in the positions of the remaining tobacco commodities 40 when the target tobacco commodity 40 has been dispensed by the dispenser mechanism, so that it is possible to eliminate the need of updating the position information after the dispensing of the target tobacco commodity 40.

Also, in the case where multiple tobacco commodities 40 are supported by the support section 12, in comparison with a case where the support section 12 does not exist, it is likely that no change occurs in the positions of the remaining tobacco commodities 40 when the target tobacco commodity 40 has been dispensed by the dispenser mechanism, so that it is made possible to reduce the frequency of updating of the position information after the dispensing of the tobacco commodity 40.

### (Fourth Embodiment)

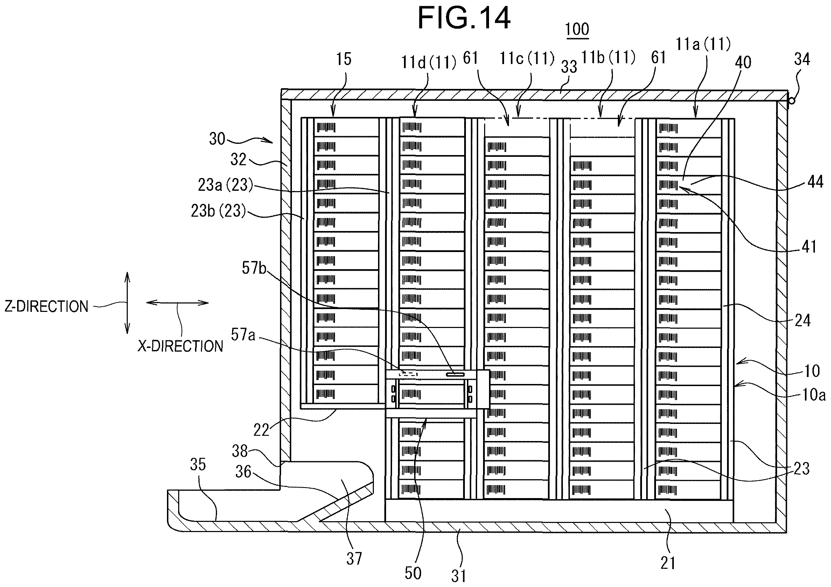

Fig. 14 is a schematic cross-sectional front view for explanation of the dispensing device 100 according to the fourth embodiment.

The structure of the dispensing device 100 according to this embodiment is the same as or similar to, for example, the dispensing device 100 according to the first embodiment.

Meanwhile, the accommodation column 11e in the first embodiment is provided in this embodiment as an input section 15 which is a dedicated space for temporarily accommodating the tobacco commodities 40 restocked by an operator. The dispensing of the tobacco commodity 40 by the conveying unit 50 is not performed via the input section 15.

In the case of this embodiment, when an empty space 61 is created in the accommodation unit 10, the conveying unit 50 scans the tobacco commodity 40 of the input section 15, reads the barcode 41, stores the identification information that has been read in the RAM 80c, and moves the tobacco commodity 40 to the accommodation unit 10.

As described above, the dispensing device 100 according to this embodiment includes the input section 15 into which the tobacco commodities 40 are input and the accommodation mechanism (conveying unit 50) that conveys the tobacco commodity 40 from the input section 15 to accommodate them in the accommodation unit 10.

In the case of this embodiment, the scanning in the idling time should be performed only on the input section 15.

Also, in other words, the accommodation unit 10 includes the first accommodation unit (input section 15) and the second accommodation unit (for example, accommodation column 11b, 11c) and the dispensing device 100 includes the moving mechanism (conveying unit 50) that moves the tobacco commodity 40 from the first accommodation unit to the second accommodation unit. It should be noted that in the case of this embodiment, the dispenser mechanism also functions as the moving mechanism.

It should be noted that, in Fig. 14, of each accommodation column 11 and the input section 15, the input section 15 is arranged at the nearest position from the take-out slope 36, the take-out opening 38, and the take-out saucer 35. Meanwhile, the input section 15 is preferably arranged at the farthest position from the take-out slope 36, take-out opening 38, and the take-out saucer 35.

Since the accommodation column 11 from which the accommodated tobacco commodity 40 is to be dispensed is arranged closer to the take-out slope 36, the take-out opening 38, and the take-out saucer 35 than the input section 15, the time required in dispensing of the tobacco commodity 40 can be shortened.

### (Fifth Embodiment)

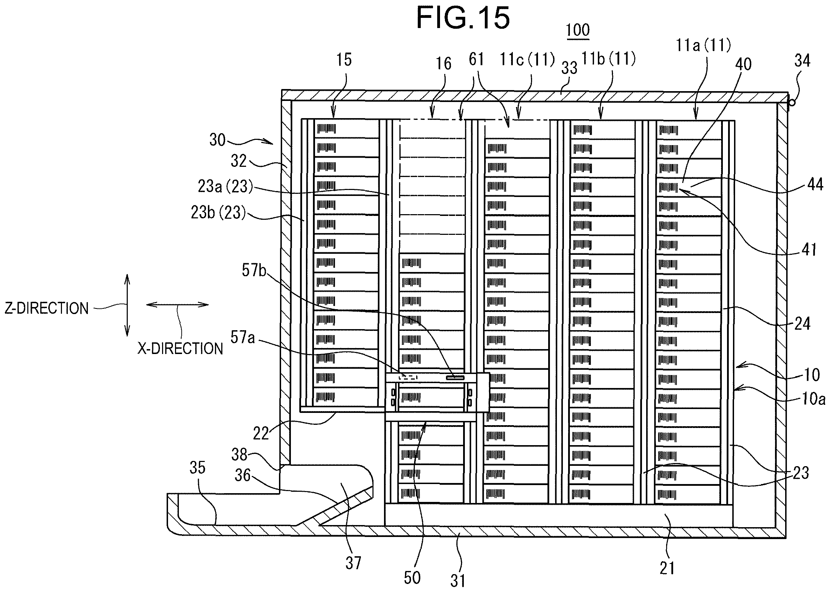

Fig. 15 is a schematic cross-sectional front view for explanation of the dispensing device according to the fifth embodiment.

The structure of the dispensing device 100 according to this embodiment is the same as or similar to, for example, the dispensing device 100 according to the fourth embodiment.

Meanwhile, the accommodation column 11d in the fourth embodiment is provided in this embodiment as the storage-only first accommodation unit 16 for storing the tobacco commodities 40, and dispensing of the tobacco commodity 40 by the conveying unit 50 is not performed via the first accommodation unit 16.

Meanwhile, the other accommodation column 11 in the accommodation unit 10 is provided as the second accommodation unit configured to accommodate the tobacco commodities 40 to be dispensed by the conveying unit 50.

In addition, when the tobacco commodity 40 has been dispensed by the conveying unit 50 from the second accommodation unit, the conveying unit 50 performs in the idling time the operation for moving the tobacco commodities 40 of the same type (the same brand) as that of the tobacco commodity 40 that has been dispensed from the second accommodation unit, from the first accommodation unit 16 to the second accommodation unit.

As described above, the accommodation unit 10 includes the first accommodation unit 16 and the second accommodation unit, and the dispensing device 100 includes the moving mechanism (conveying unit 50) that moves the tobacco commodity 40 from the first accommodation unit 16 to the second accommodation unit.

It should be noted that in the case of this embodiment, the dispenser mechanism also functions as the moving mechanism.

Also, the first accommodation unit 16 is dedicated to storage of the tobacco commodities 40 and the second accommodation unit accommodates the tobacco commodities 40 to be dispensed by the dispenser mechanism.

Also, the moving mechanism (conveying unit 50) is configured to move the tobacco commodity(s) 40 of the same type as that of the tobacco commodity 40 dispensed from the second accommodation unit by the dispenser mechanism from the first accommodation unit 16 to the second accommodation unit.

Specifically, the accommodation unit 10 includes the storage-only first accommodation unit 16 for storage of the tobacco commodities 40 and the second accommodation unit that accommodates the tobacco commodities 40 to be dispensed by the dispenser mechanism (conveying unit 50), where the dispensing device 100 includes the moving mechanism (conveying unit 50) that moves the tobacco commodity(s) 40 of the same type as that of the tobacco commodity 40 dispensed from the second accommodation unit by the dispenser mechanism from the first accommodation unit 16 to the second accommodation unit.

Meanwhile, the present invention is not limited to this example and, first accommodation unit 16 may not be dedicated to storage of the tobacco commodities 40. Specifically, dispensing of the tobacco commodity 40 by the conveying unit 50 may be performed via the first accommodation unit 16.

Also, the tobacco commodity 40 which is moved from the first accommodation unit 16 to the second accommodation unit does not always have to be the tobacco commodity 40 of the same type as that of the tobacco commodity 40 dispensed from the second accommodation unit by the dispenser mechanism.

Also, in the case of this embodiment, the destination of the movement of the tobacco commodity 40 from the input section 15 is limited to the first accommodation unit 16. Specifically, when an empty space 61 is created in the first accommodation unit 16, the conveying unit 50 scan the tobacco commodity 40 of the input section 15 to read the barcode 41, stores the identification information that has been read in the RAM 80c, and moves the tobacco commodity 40 to the first accommodation unit 16.

### (Sixth Embodiment)

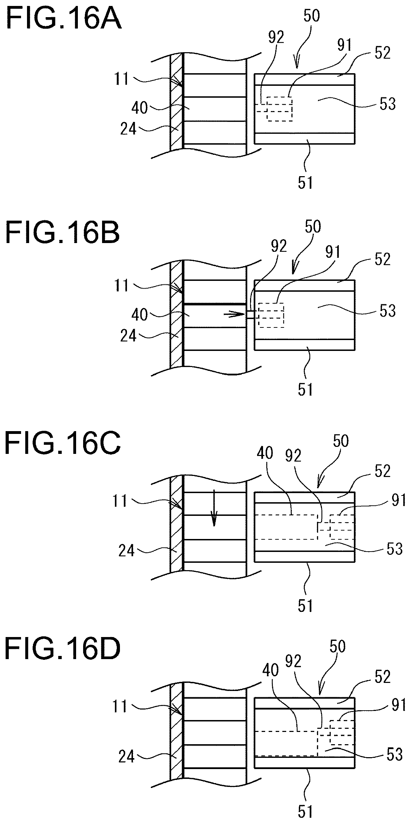

Fig. 16A, Fig. 16B, Fig. 16C and Fig. 16D are schematic diagrams for explanation of the dispensing device according to the sixth embodiment.

The dispensing device according to this embodiment differs from the above-described dispensing device 100 according to the first embodiment in the aspects described below. In the description of the dispensing device according to this embodiment, the common features as those of the above-described dispensing device 100 according to the first embodiment will not be repeatedly explained.

In the case of this embodiment, the conveying unit 50 is not configured to take out the tobacco commodity 40 from the accommodation column 11 by holding the tobacco commodity 40 by the arms but configured to pick up the tobacco commodity 40 by a suction nozzle 92 that sucks air to take out the tobacco commodity 40 from the accommodation column 11.

As illustrated in Fig. 16A, the conveying unit 50 includes a tubular suction nozzle 92 connected to a not-shown suction source (vacuum pump or the like) and a moving unit 91 configured to move the suction nozzle 92 frontward and backward.

The moving unit 91 is configured to be movable by a not-shown moving mechanism relative to the side wall section 53 leftward and rightward in Fig. 16A.

The suction nozzle 92 extends in the left-right direction in Fig. 16A (i.e., the Y-direction) and the tip thereof protrudes more leftward than the moving unit 91 in Fig. 16A.

When the tobacco commodity 40 is to be dispensed, first, as illustrated in Fig. 16A, the conveying unit 50 moves to the position where the tip of the suction nozzle 92 faces the tobacco commodity 40 of the type that corresponds to the dispensing order.

Next, as illustrated in Fig. 16B, when the moving unit 91 is moved toward the accommodation column 11, the tip of the suction nozzle 92 is brought into proximity to the tobacco commodity 40 and suction of the tobacco commodity 40 by the suction nozzle 92 is started to pick up the tobacco commodity 40 by the suction nozzle 92.

Next, as illustrated in Fig. 16C, the moving unit 91 moves to the side away from the accommodation column 11 in the state where the tobacco commodity 40 is picked up by the suction nozzle 92 continues, and thereby the tobacco commodity 40 is taken out from the accommodation column 11.

Next, as illustrated in Fig. 16D, by stopping the suction of the tobacco commodity 40 by the suction nozzle 92, the tobacco commodity 40 drops onto the table-like section 51 and the tobacco commodity 40 is supported by the table-like section 51.

Thereafter, as has been described in the first embodiment, the conveying unit 50 moves to the dispensing position and the table-like section 51 is rotated downward. By virtue of this, the tobacco commodity 40 on the table-like section 51 is dispensed via the take-out slope 36 onto the take-out saucer 35.

It should be noted that in this embodiment as well, at the time of withdrawal of the tobacco commodity 40 from the accommodation column 11, movement of the tobacco commodities 40 residing above and below the tobacco commodity 40 to be dispensed are preferably restricted by virtue of the table-like section 51 and the ceiling section 52.

### (Seventh Embodiment)

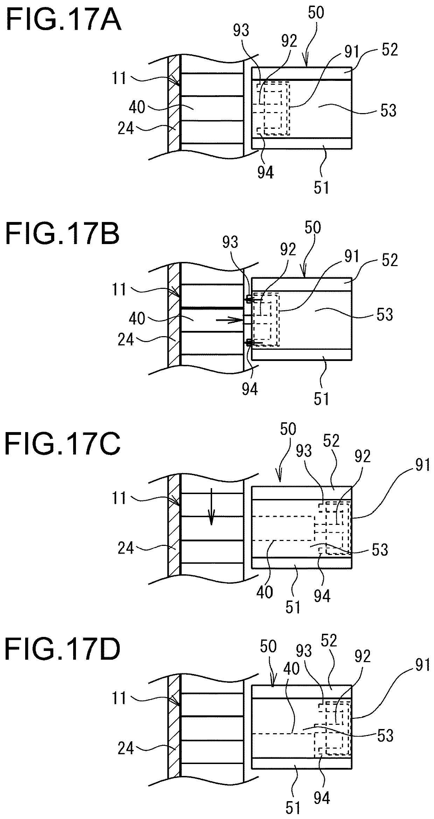

Fig. 17A, Fig. 17B, Fig. 17C and Fig. 17D are schematic diagrams for explanation of the dispensing device according to the seventh embodiment.

The dispensing device according to this embodiment differs from the dispensing device according to the sixth embodiment in the aspects described below. In the description of the dispensing device according to this embodiment, the common features as those of the dispensing device according to the sixth embodiment will not be repeatedly explained.

In the case of this embodiment, the moving unit 91 is equipped with the suction source such as a vacuum pump. In addition, the conveying unit 50 includes a pair of (upper and lower) pressing nozzles 93, 94 that blow discharged air from this suction source. The pressing nozzle 93 and the pressing nozzle 94 are provided in the moving unit 91.

The pressing nozzles 93, 94 have a tubular shape like the suction nozzle 92. The pressing nozzle 93 is arranged above the suction nozzle 92 and the pressing nozzle 94 is arranged beneath the suction nozzle 92. The pressing nozzle 93 and the pressing nozzle 94 extend in parallel with the suction nozzle 92.

The tip of the suction nozzle 92 protrudes more leftward in Fig. 17A than the tips of the pressing nozzle 93 and the pressing nozzle 94.

When the tobacco commodity 40 is to be dispensed, first, as illustrated in Fig. 17A, the conveying unit 50 is moved to the position where the tip of the suction nozzle 92 faces the tobacco commodity 40 of the type that corresponds to the dispensing order.

Next, as illustrated in Fig. 17B, when the moving unit 91 is moved toward the accommodation column 11, the tip of the suction nozzle 92 is brought into proximity to the tobacco commodity 40 that corresponds to the dispensing order and, the tip of the pressing nozzle 93 is brought into proximity to the adjacent tobacco commodity 40 on the upper side of the tobacco commodity 40 that corresponds to the dispensing order, and the tip of the pressing nozzle 93 is brought into proximity to the adjacent tobacco commodity 40 on the lower side of the tobacco commodity 40 that corresponds to the dispensing order.

In addition, the pickup of the tobacco commodity 40 by the suction nozzle 92 is started and the tobacco commodity 40 is picked up by the suction nozzle 92. At this point, the discharged air from the suction source is blown out of the tips of the pressing nozzle 93 and the pressing nozzle 94, and the adjacent tobacco commodities 40 above and below the tobacco commodity 40 that corresponds to the dispensing order are pressed to the left side in Fig. 17B.

Next, as illustrated in Fig. 17C, the moving unit 91 moves to the side away from the accommodation column 11 while the tobacco commodity 40 is picked up by the suction nozzle 92 and the discharged air is blown from the pressing nozzles 93, 94. By virtue of this, the tobacco commodity 40 that corresponds to the dispensing order is taken out from the accommodation column 11 while each of the adjacent tobacco commodities 40 above and below the tobacco commodity 40 that corresponds to the dispensing order are pressed to the left side in Fig. 17C. By virtue of this, the adjacent tobacco commodities 40 residing above and below the tobacco commodity 40 that corresponds to the dispensing order can be suppressed from being taken out.

Next, as illustrated in Fig. 16D, by stopping the suction of the tobacco commodity 40 by the suction nozzle 92, the tobacco commodity 40 drops onto the table-like section 51 and the tobacco commodity 40 is supported by the table-like section 51.

Thereafter, as has been described in the first embodiment, the conveying unit 50 moves to the dispensing position and the table-like section 51 is rotated downward. By virtue of this, the tobacco commodity 40 on the table-like section 51 is dispensed via the take-out slope 36 onto the take-out saucer 35.

### (Eighth Embodiment)

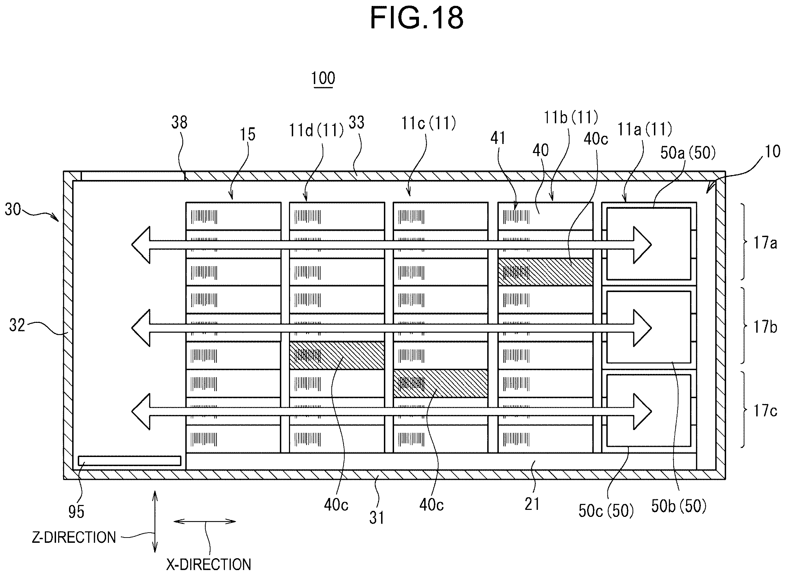

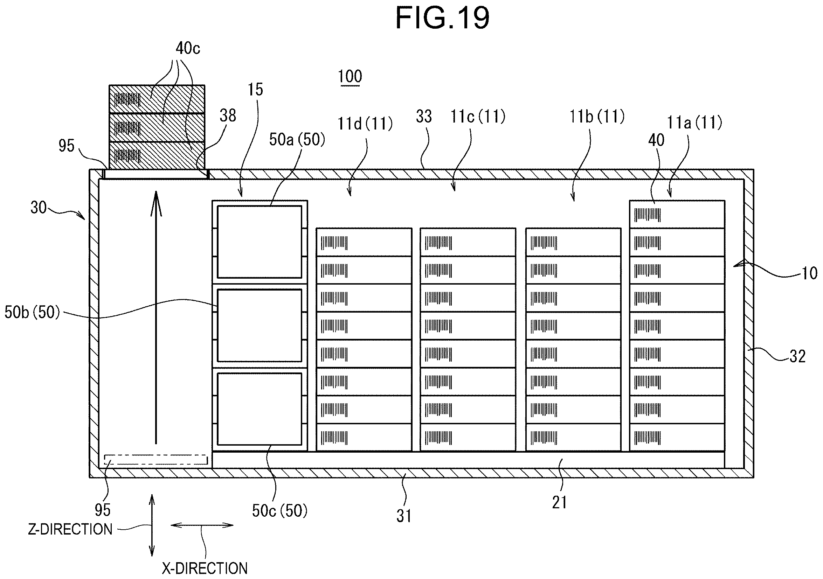

Fig. 18 and Fig. 19 are schematic cross-sectional front views of the dispensing device 100 according to the eighth embodiment. Fig. 18 illustrates the state before the dispensing of the tobacco commodity 40 and Fig. 19 illustrates the state after the dispensing of the tobacco commodity 40.

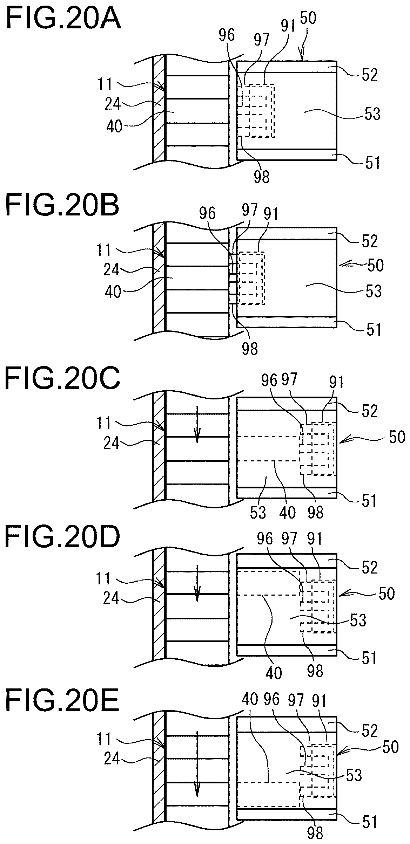

Fig. 20A, Fig. 20B, Fig. 20C, Fig. 20D and Fig. 20E are schematic diagrams that illustrate the takeout operation of the tobacco commodity 40 from the accommodation column 11 according to the eighth embodiment.

The dispensing device according to this embodiment differs from the above-described dispensing device 100 according to the first embodiment in the aspects described below. In the description of the dispensing device according to this embodiment, the common features as those of the above-described dispensing device 100 according to the first embodiment will not be repeatedly explained.

In the case of this embodiment, the accommodation unit 10 includes four accommodation columns 11a, 11b, 11c, and 11d in one row. It should be noted that each accommodation column 11 is capable of accommodating, for example, up to nine tobacco commodities 40 in a vertically stacked state.

Also, the dispensing device 100 includes an input section 15 at a location adjacent to the accommodation column 11d. In the input section 15 as well, for example, up to nine vertically stacked tobacco commodities 40 can be accommodated.

Further, the dispensing device 100 includes a plurality of conveying units 50. Specifically, the dispensing device 100 includes, for example, three conveying units 50 (the conveying units 50a, 50b, 50c) from top to bottom.

The conveying unit 50a serves as a functional unit for dispensing the tobacco commodities 40 of the first, second, and third tiers from the top in each accommodation column 11.

The conveying unit 50b serves as a functional unit for dispensing the tobacco commodities 40 of the fourth, fifth, and sixth tiers from the top in each accommodation column 11.

The conveying unit 50c serves as a functional unit for dispensing the tobacco commodities 40 of the first, second, and third from the bottom in each accommodation column 11.

It should be noted that in the accommodation unit 10, the region corresponding to three tiers of the tobacco commodities 40 from which the tobacco commodity 40 is dispensed by the conveying unit 50a is referred to as the first accommodation area 17a, the region corresponding to three tiers of the tobacco commodities 40 from which the tobacco commodity 40 is dispensed by the conveying unit 50b is referred to as the second accommodation area 17b, and the region corresponding to three tiers of the tobacco commodities 40 from which the tobacco commodity 40 is dispensed by the conveying unit 50c is referred to as the third accommodation area 17c.

In the case of this embodiment, each conveying unit 50 is configured to be movable, for example, only in the horizontal direction.

Further, the dispensing device 100 includes an elevator 95 configured to support tobacco commodity 40 taken out from the accommodation column 11 by the conveying unit 50 and raise the tobacco commodity 40. The elevator 95 is configured to be raised and lowered by a not-shown elevating mechanism.

A take-out opening 38 is formed on the top plate section 33 of the housing 30. When the elevator 95 is raised, the tobacco commodity 40 supported by the elevator 95 is discharged toward a position above the housing 30 (Fig. 19).

As illustrated in Fig. 20A, in the case of this embodiment, the conveying unit 50 includes the moving unit 91, and the first suction nozzle 96, the second suction nozzle 97 and the third suction nozzle 98 that move forward and backward all together by the moving unit 91. In the case of this example, the conveying unit 50 does not have the structure for holding the tobacco commodity 40 by arms, but has the structure for picking up and holding the tobacco commodity 40 by means of the first suction nozzle 96, the second suction nozzle 97, or the third suction nozzle 98 which suck the air. The moving unit 91 is configured to be movable leftward and rightward in Fig. 20A relative to the side wall section 53 by a not-shown moving mechanism.

Each of the first suction nozzle 96, the second suction nozzle 97, and the third suction nozzle 98 is formed in a tubular shape and connected to a not-shown suction source (vacuum pump or the like) via a not-shown connection pipe.

Further, the conveying unit 50 includes a not-shown switching valve. The switching valve is configured to switch between a first state, a second state, and a third state. In the first state, the first suction nozzle 96 among the first suction nozzle 96, the second suction nozzle 97 and the third suction nozzle 98 is selectively brought into communication with the suction source so as to pick up the tobacco commodity 40 selectively by the first suction nozzle 96. In the second state, the second suction nozzle 97 is selectively brought into communication with the suction source so as to pick up the tobacco commodity 40 selectively by the second suction nozzle 97. In the third state, the third suction nozzle 98 is selectively brought into communication with the suction source so as to pick up the tobacco commodity 40 selectively by the third suction nozzle 98.

The second suction nozzle 97 is arranged above the first suction nozzle 96 by the thickness dimension of the standard tobacco commodity 40.

The third suction nozzle 98 is arranged beneath the first suction nozzle 96 by the thickness dimension of the standard tobacco commodity 40.

Dispensing of the tobacco commodity 40 by the conveying unit 50 is performed in the following manner.

Specifically, first, as illustrated in Fig. 20A, the conveying unit 50 moves to the position corresponding to the tobacco commodity 40 to be dispensed.

Next, when the moving unit 91 is moved toward the accommodation column 11, the first suction nozzle 96, the second suction nozzle 97, and the third suction nozzle 98 are moved all together toward the accommodation column 11.

In addition, among the first suction nozzle 96, the second suction nozzle 97, and the third suction nozzle 98, one suction nozzle that is at the height position corresponding to the tobacco commodity 40 to be dispensed selectively picks up the tobacco commodity 40, and thus the tobacco commodity 40 is picked up.

Next, when the moving unit 91 moves to the side away from the accommodation column 11, the first suction nozzle 96, the second suction nozzle 97, and the third suction nozzle 98 are moved all together to the side away from the accommodation column 11.

When the tobacco commodity 40 has been picked up by the first suction nozzle 96, then the tobacco commodity 40 picked up by the first suction nozzle 96 is taken out from the accommodation column 11 as illustrated in Fig. 20C.

When the tobacco commodity 40 has been picked up by the second suction nozzle 97, then the tobacco commodity 40 picked up by the second suction nozzle 97 is taken out from the accommodation column 11 as illustrated in Fig. 20D.

When the tobacco commodity 40 has been picked up by the third suction nozzle 98, then the tobacco commodity 40 picked up by the third suction nozzle 98 is taken out from the accommodation column 11 as illustrated in Fig. 20E.

It should be noted that, after the tobacco commodity 40 picked up by any of the suction nozzles has been introduced into the region of the interval where the ceiling section 52 and the table-like section 51 faces with each other, the state of suction of the tobacco commodity 40 by the suction nozzle is exited, and thereby the tobacco commodity 40 drops onto the table-like section 51 to be supported by the table-like section 51.

Next, an example of dispensing operation of the tobacco commodity 40 according to this embodiment will be described.

As illustrated in Fig. 18, it is assumed that, in the state prior to the dispensing, the tobacco commodities 40c of one and the same brand are arranged at the position in the first accommodation area 17a in the accommodation column 11b, the position in the second accommodation area 17b in the accommodation column 11c, and the position in the third accommodation area 17c in the accommodation column 11d, respectively.

In addition, it is assumed that the dispensing order requesting dispensing of three tobacco commodities 40c at one time has been issued.

Then, the three conveying units 50 start to operate in a parallel manner, and respectively takes out the tobacco commodities 40c in the corresponding one of the accommodation areas for which they are responsible and covey them onto the elevator 95.

Specifically, the conveying unit 50a takes out, from the accommodation column 11b, the tobacco commodity 40c that is arranged at the position in the first accommodation area 17a in the accommodation column 11b, conveys the tobacco commodity 40c onto the elevator 95, and, further, delivers the tobacco commodity 40c to the elevator 95.

Also, the conveying unit 50b takes out, from the accommodation column 11c, the tobacco commodity 40c that is arranged at the position in the second accommodation area 17b in the accommodation column 11c, conveys the tobacco commodity 40c onto the elevator 95, and, further, delivers the tobacco commodity 40c to the elevator 95.

Also, the conveying unit 50c takes out, from the accommodation column 11d, the tobacco commodity 40c that is arranged at a position in the third accommodation area 17c in the accommodation column 11d, conveys the tobacco commodity 40c onto the elevator 95, and, further, delivers the tobacco commodity 40c to the elevator 95.

Specifically, these operations are performed in parallel with each other.

Since the tobacco commodity 40c is delivered from each conveying unit 50 onto the elevator 95, the elevator 95 is placed in a state where three tobacco commodities 40c are placed thereon.

Further, when the elevator 95 is raised in the state where these tobacco commodities 40c are placed thereon, as illustrated in Fig. 19, the three tobacco commodities 40c supported by the elevator 95 are discharged at the upper position of the housing 30.

As described above, in the case of this embodiment, the accommodation units 10 are arranged independently of each other, and each include a plurality of accommodation areas (the first accommodation area 17a, the second accommodation area 17b, and the third accommodation area 17c) each capable of accommodating a plurality of tobacco commodities 40. The dispensing device 100 includes a plurality of dispenser mechanisms (the conveying units 50a, 50b, and 50c) provided corresponding to each of the accommodation areas.

Here, the state illustrated in Fig. 18 is realized by any one of the conveying units 50 causing the tobacco commodities 40c of the same brand among the tobacco commodities 40 that have been input into the input section 15 to be accommodated in a distributed manner in the first accommodation area 17a, the second accommodation area 17b, and the third accommodation area 17c.

Specifically, the accommodation mechanism (conveying unit 50) causes the tobacco commodities 40c of the particular type to be accommodated in two or more accommodation areas of the multiple accommodation areas in a distributed manner.

According to this embodiment, since it is possible to perform in a parallel manner the dispensing operation of the tobacco commodities 40c by the multiple conveying units 50, it is made possible to shorten the time required in dispensing of the tobacco commodities 40c when multiple tobacco commodities 40c are to be dispensed at one time.

It should be noted that, in Figs. 18 and 19, among the accommodation columns 11 and the input section 15, the input section 15 is arranged at the nearest position to the elevator 95 and the take-out opening 38. Meanwhile, it is also preferable that the input section 15 be arranged at the farthest position from the elevator 95 and the take-out opening 38.

Since the accommodation column 11 from which the accommodated tobacco commodity 40 is to be dispensed is arranged closer to the elevator 95 and the take-out opening 38 than the input section 15, the time required in dispensing of the tobacco commodity 40 can be shortened.

### (Ninth Embodiment)

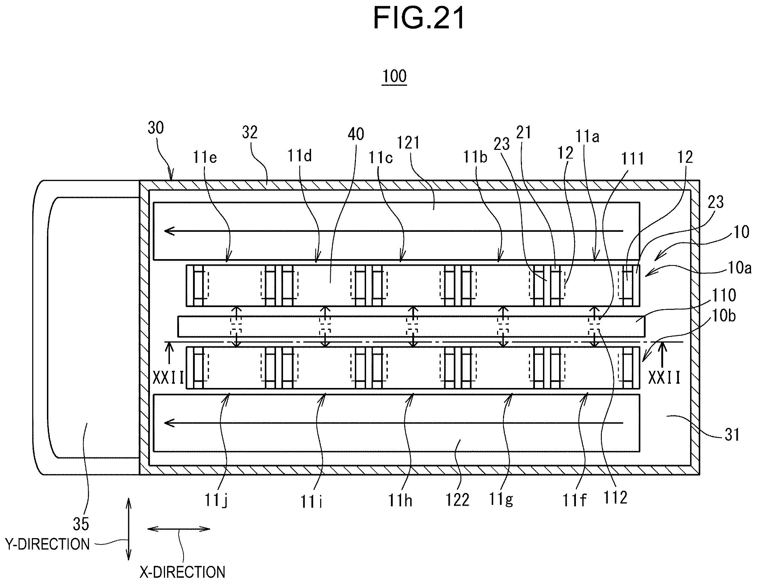

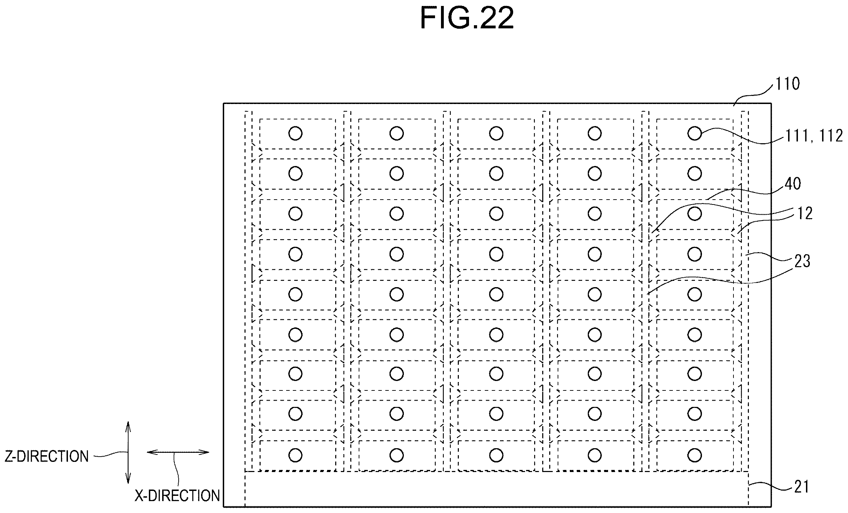

Fig. 21 is a schematic cross-sectional plan view of the dispensing device 100 according to the ninth embodiment and Fig. 22 is a cross-sectional view taken along the line XXII-XXII of Fig. 21.

The dispensing device according to this embodiment differs from the dispensing device 100 according to the first embodiment in the aspects described below. In the description of the dispensing device according to this embodiment, the common features as those of the dispensing device 100 according to the first embodiment will not be repeatedly explained.

In the case of this embodiment, the dispensing device 100 does not include the conveying unit 50 that moves relative to the accommodation unit 10 to perform withdrawal from the accommodation unit 10 and conveyance of tobacco commodity 40 and the take-out slope 36 (and the slope sidewall 37).

Instead of them, the dispensing device 100 includes, as will be described below, a mechanism that selectively causes the tobacco commodity 40 that corresponds to the dispensing order to drop from the accommodation unit 10 by air pressure and a mechanism that conveys the tobacco commodity 40 that has dropped from the accommodation unit 10 to the outside of the housing 30.

In the case of this embodiment, the first column row 10a and the second column row 10b of the accommodation unit 10 do not have the sidewall 24 and the spacer section 25. As a result, each accommodation column 11 (the accommodation columns 11a, 11b, 11c, 11d, 11e, 11f, 11g, 11h, 11i, and 11j) has an open-ended and hollow-cylindrical structure frontward and backward (in both directions in the Y-direction).

Also, in the case of this embodiment, each accommodation column 11 includes, as has been described in the third embodiment (Fig. 13), the support sections 12 in multiple stages supporting the individual tobacco commodity 40 with intervals provided above and below. Specifically, the interval between the upper and lower adjacent support sections 12 corresponds to the thickness dimension of one tobacco commodity 40 (see Fig. 22).

It should be noted that, in the example of Fig. 22, the first column row 10a and the second column row 10b both have the five accommodation columns 11 arranged in the X-direction. Nine accommodation positions are formed in each accommodation column 11. Meanwhile, the number of accommodation column 11 provided in the dispensing device 100 and the number of the accommodation positions in each accommodation column 11 are not limited to this example.

Further, the dispensing device 100 according to this embodiment includes an air discharge wall 110 standing upright between the first column row 10a and the second column row 10b. The air discharge wall 110 is formed in a shape of a plate whose surfaces are oriented to the front and the rear.

In the air discharge wall 110, a plurality of air discharge holes 111 opened rearward and a plurality of air discharge holes 112 opened frontward are formed.

In the dispensing device 100 according to this embodiment, high-pressure air can be discharged from the air discharge wall 110 rearward via the air discharge hole 111 and high-pressure air can be discharged from the air discharge wall 110 rearward via the air discharge hole 112.

The air discharge holes 111 correspond to the individual ones of all the accommodation positions in the first column row 10a in a one-to-one correspondence relationship. Specifically, in the example of Fig. 22, in the air discharge wall 110, five rows and nine stages, and thus a total of 45 air discharge holes 111 are arranged in a matrix shape in the X-direction and the Z-direction. The center of each air discharge hole 111 faces the center of the tobacco commodity 40 when the tobacco commodity 40 is held at each accommodation position in the first column row 10a.

Hence, when the high-pressure air is discharged from any one of the air discharge holes 111, among the tobacco commodities 40 accommodated in the first column row 10a, the tobacco commodity 40 at the accommodation position that corresponds to this air discharge hole 111 is blown rearward and drops from the accommodation column 11 of the first column row 10a.

Likewise, the air discharge holes 112 correspond to the individual ones of all the accommodation positions in the second column row 10b in a one-to-one correspondence relationship. Specifically, in the example of Fig. 22, in the air discharge wall 110, five rows and nine stages, and thus a total of 45 air discharge holes 112 are arranged in a matrix shape in the X-direction and the Z-direction. The center of each air discharge hole 112 faces the center of the tobacco commodity 40 when the tobacco commodity 40 is held at each accommodation position in the second column row 10b.

Hence, when the high-pressure air is discharged from any one of the air discharge holes 112, among the tobacco commodities 40 accommodated in the second column row 10b, the tobacco commodity 40 at the accommodation position that corresponds to this air discharge hole is blown frontward and drops from the accommodation column 11 of the second column row 10b.

Further, the dispensing device 100 according to this embodiment includes an air supply source such as a not-shown air compressor or the like supplying high-pressure air to the air discharge holes 111 and the air discharge holes 112, a plurality of not-shown air supply pipes individually supplying high-pressure air from the air supply source to each air discharge hole 111 and each air discharge hole 112, and not-shown switching valves switching an air discharge port (one or more air discharge holes of the air discharge holes 111 and the air discharge holes 112) to which the high-pressure air is supplied from the air supply source via the air supply pipe.

The air supply pipe corresponds to respective air discharge holes 111 and 112 in a one-to-one correspondence relationship. Also, the switching valve corresponds to each air supply pipe in a one-to-one correspondence relationship. It should be noted that in the air supply pipe, the portion upstream of the switching valve (the air supply source's side) can be configured by one single pipe. Specifically, as the configuration of the air supply pipe, a configuration may be exemplified in which one main pipe connected to the air supply source and branch pipes branching from the main pipe are included and the switching valves are provided in the respective branch pipes.

Also, a portion of each of the air supply pipes (each of the branch pipes) is embedded in the air discharge wall 110.

Further, as illustrated in Fig. 21, the dispensing device 100 according to this embodiment includes, for example, a conveyor 121 configured to convey the tobacco commodity 40 dropping from the accommodation column 11 of the first column row 10a to the outside of the housing 30 and a conveyor 122 configured to convey the tobacco commodity 40 dropping from the accommodation column 11 of the second column row 10b to the outside of the housing 30.

The respective conveyors 121, 122 are arranged horizontally along the upper surface of the bottom plate section 31 of the housing 30. The respective conveyors 121, 122 respectively extend in the X-direction and are configured to be capable of conveying the tobacco commodity 40 from the right side to the left side in Fig. 21 and conveying the tobacco commodity 40 to the take-out saucer 35 outside the housing 30. It should be noted that, although not shown in Fig. 21, in the side wall section 32 of the housing 30, a take-out opening that brings the outside and inside of the housing 30 into communication with each other (see the take-out opening 38 of Fig. 1) is formed. The tobacco commodity 40 that has been conveyed by the conveyor 121 or 122 is conveyed via this take-out opening from the inside of the housing 30 to the take-out saucer 35.

It should be noted that the conveyors 121, 122 may be arranged such that they are contained in the housing 30 as illustrated in the drawing or may extend toward the take-out saucer 35 passing the take-out opening.

In the case of this embodiment, at the upper position of the conveyor 121 and the conveyor 122, a reading unit (not shown) is provided which can move relative to the accommodation unit 10 and read the barcodes 41 of the respective tobacco commodities 40 of the accommodation unit 10.

The moving mechanism of the reading unit can be configured as the same or similar one as the moving mechanism of the conveying unit 50 described in the first embodiment.

Next, the dispensing operation of the tobacco commodity 40 in this embodiment will be described.

In the case of this embodiment, the dispensing device 100 discharges the high-pressure air from the air discharge hole 111 or the air discharge hole 112 corresponding to the accommodation position of the tobacco commodity 40 that corresponds to the dispensing order. By virtue of this, the tobacco commodity 40 that corresponds to the dispensing order is made to drop onto the conveyor 121 or the conveyor 122 and, further, the tobacco commodity 40 can be conveyed by the conveyor 121 or the conveyor 122 to the take-out saucer 35.

It should be noted that in order to suppress collision of the tobacco commodity 40 that is dropping from the accommodation position with the reading unit, the reading unit may be configured to evacuate to a location away from the tobacco commodity 40 that corresponds to the dispensing order.

In the case of this embodiment, since it is possible to discharge the high-pressure air at a time from the multiple locations of the air discharge holes 111 or the air discharge holes 112 in parallel with each other (for example, simultaneously), it is possible to perform dispensing of the tobacco commodities 40 at multiple accommodation positions in parallel with each other.

The conveyors 121, 122 are configured, for example, to be actuated when the dispensing device 100 has received the dispensing order and stop their actuation when it has been detected by a not-shown sensor or the like that the required number of the tobacco commodities 40 has been conveyed to the take-out saucer 35.

It should be noted that, in the above-described ninth embodiment, an example has been described where the tobacco commodity 40 that has dropped from the accommodation column 11 lands on the conveyors 121, 122. Meanwhile, the dispensing device 100 may include the conveying unit that grasps (catches) the tobacco commodity 40 dropping from the accommodation column 11 to deliver it to the conveyor 121, 122 at the upper position of the conveyor 121 and the upper position of the conveyor 122. Specifically, the conveying unit moves to the vicinity of the tobacco commodity 40 that corresponds to the dispensing order to grasp the tobacco commodity 40 and then is lowered to the vicinity of the conveyor 121 or 122 to deliver the tobacco commodity 40 to the conveyor 121 or 122.

The moving mechanism of this conveying unit can be configured as the same or similar one as the moving mechanism of the conveying unit 50 that has been described in the first embodiment.

Also, as the mechanism of the delivery from the conveying unit to the conveyor 121 or 122, for example, the mechanism that has been described using Fig. 8A and Fig. 8B can be adopted.

Also, in the ninth embodiment as well, if the reader unit is provided in the conveying unit, it is made possible to read the barcode 41 from the tobacco commodity 40 without the above-described reading unit being provided.

### (Tenth Embodiment)

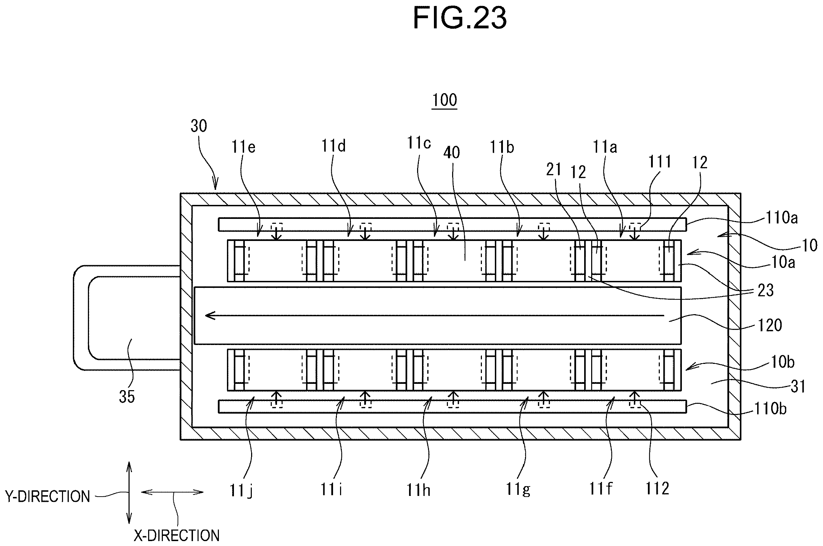

Fig. 23 is a schematic cross-sectional plan view of the dispensing device 100 according to the tenth embodiment.

The dispensing device according to this embodiment differs from the dispensing device 100 according to the ninth embodiment in the aspects described below. In the description of the dispensing device according to this embodiment, the common features as those of the dispensing device 100 according to the ninth embodiment will not be repeatedly explained.

The dispensing device 100 according to this embodiment is configured, in the same or similar manner as the above-described ninth embodiment, to be capable of causing the tobacco commodity 40 to drop from the accommodation unit 10 by high-pressure air and conveying the tobacco commodity 40 by the conveyor to the outside of the housing 30.

Meanwhile, in the case of this embodiment, the layout of the air discharge wall and the conveyor in the dispensing device 100 differs from that of the ninth embodiment.

In the case of this embodiment, one conveyor 120 is arranged between the first column row 10a and the second column row 10b. The conveyor 120 is the same or similar one as the conveyors 121, 122 in the ninth embodiment, and extends in the X-direction along the bottom plate section 31 of the housing 30.

Also, in the case of this embodiment, the air discharge wall 110 is not arranged between the first column row 10a and the second column row 10b and, instead, an air discharge wall 110a is provided so as to stand upright on the distal side of the first column row 10a and an air discharge wall 110b is provided so as to stand upright on the proximal side of the second column row 10b.

The air discharge wall 110a is formed in a shape of a plate with its surfaces oriented frontward and rearward. A plurality of air discharge holes 111 opened frontward are provided in the air discharge wall 110a. Hence, it is possible to discharge high-pressure air from the air discharge wall 110a via the air discharge hole 111 frontward. In addition, when the high-pressure air has been discharged from any of the air discharge holes 111, among the tobacco commodities 40 accommodated in the first column row 10a, the tobacco commodity 40 at the accommodation position corresponding to this air discharge hole 111 is blown frontward, and drops from the accommodation column 11 of the first column row 10a.

Also, the air discharge wall 110b is formed in a shape of a plate with its surfaces oriented frontward and rearward. A plurality of air discharge holes 112 opened rearward are formed in the air discharge wall 110b. Hence, it is possible to discharge high-pressure air from the air discharge wall 110b via the air discharge hole 112 rearward. In addition, when the high-pressure air has been discharged from any of the air discharge holes 112, then, among the tobacco commodities 40 accommodated in the second column row 10b, the tobacco commodity 40 at the accommodation position corresponding to this air discharge hole 112 is blown frontward and drops from the accommodation column 11 of the second column row 10b.

In the case of this embodiment, a portion of each of the air supply pipes supplying the high-pressure air to the air discharge hole 111 is embedded in the air discharge wall 110a and a portion of each of the air supply pipes supplying high-pressure air to the air discharge hole 112 is embedded in the air discharge wall 110b.

In the case of this embodiment as well, at the upper position of the conveyor 120, a reading unit (not shown) is provided which can move relative to the accommodation unit 10 and read the barcodes 41 of the respective tobacco commodities 40 of the accommodation unit 10, or a conveying unit is provided which grasps the tobacco commodity 40 dropping from the accommodation column 11 to deliver it onto the conveyor 120.

According to this embodiment, the same or similar effect as that of the ninth embodiment can be obtained, in addition to which the number of the conveyors can be reduced and thereby reduction in dimension in the Y-direction of the dispensing device 100 can be expected.

### (Eleventh Embodiment)

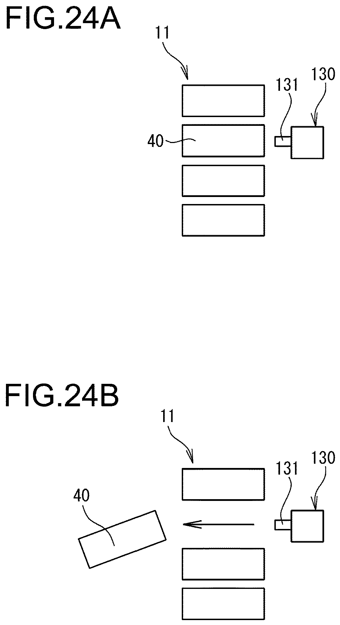

Fig. 24A and Fig. 24B are schematic side views of the dispensing device according to the eleventh embodiment.

The dispensing device according to this embodiment differs from the dispensing device 100 according to the ninth embodiment in the aspects described below. In the description of the dispensing device according to this embodiment, the same or similar features as those of the dispensing device 100 according to the ninth embodiment will not be repeatedly explained.

In the case of this embodiment, unlike the ninth embodiment, the dispensing device 100 does not include the air discharge wall 110. Instead of it, the dispensing device 100 according to this embodiment includes a dispensing unit 130. This dispensing unit 130 is movable in the same or similar manner as the conveying unit 50 in the first embodiment.

The dispensing unit 130 includes a tabular discharge nozzle 131 that discharges high-pressure air. When the high-pressure air is selectively discharged from the discharge nozzle 131 toward the tobacco commodity 40 accommodated in the accommodation column 11, the tobacco commodity 40 is allowed to drop from the accommodation column 11.

The discharge nozzle 131 is connected via a not-shown flexible tube to an air supply source such as an air compressor or the like. High-pressure air is supplied from the air supply source to the discharge nozzle 131 via a flexible tube.

Further, the dispensing device 100 includes a switching valve for performing switching between a state where the high-pressure air is supplied from the air supply source to the discharge nozzle 131 and a state where it is not supplied.

When the tobacco commodity 40 is to be dispensed, first, as illustrated in Fig. 24A, the dispensing unit 130 is moved to the position where the tip of the discharge nozzle 131 faces the tobacco commodity 40 of the type that corresponds to the dispensing order.

Next, as illustrated in Fig. 24B, when the high-pressure air is discharged from the discharge nozzle 131, the tobacco commodity 40 that corresponds to the dispensing order drops from the accommodation column 11, so that the tobacco commodity 40 can be dispensed to the outside of the housing 30 in the same or similar manner as in the ninth embodiment.

### (Twelfth Embodiment)

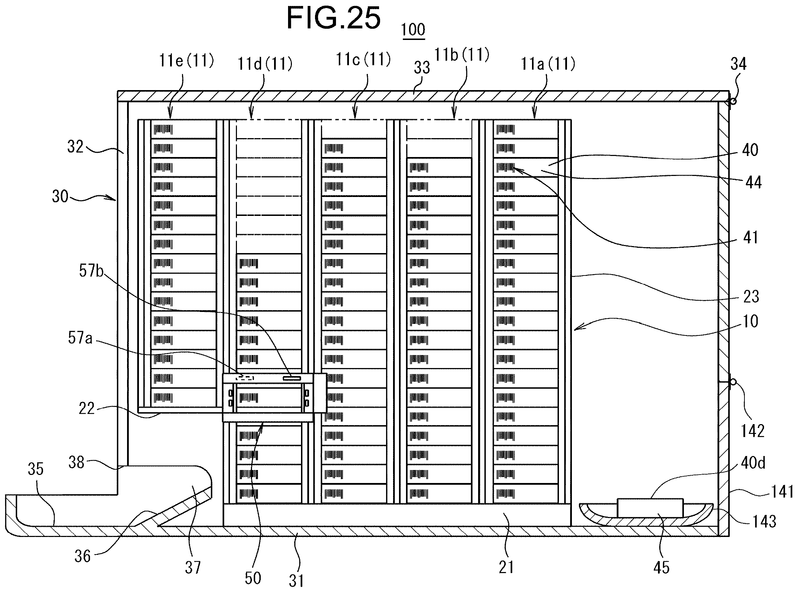

Fig. 25 is a schematic cross-sectional front view of the dispensing device 100 according to the twelfth embodiment.

The dispensing device according to this embodiment differs from the dispensing device 100 according to the first embodiment in the aspects described below. In the description of the dispensing device according to this embodiment, the common features as those of the dispensing device 100 according to the first embodiment will not be repeatedly explained.

As described above, restocking of the accommodation unit 10 with the tobacco commodities 40 is performed manually by an operator. As a result, not all tobacco commodities 40 are accommodated in the accommodation unit 10 in a state where the first side surface 44 on which the barcode 41 is indicated is oriented toward the conveying unit 50 (in other words, toward the reader units 57a, 57b). A case may also be considered where they are accommodated in the accommodation unit 10 in a state where the second side surface 45 is oriented toward the conveying unit 50.

In such a case, it is not possible to read the barcode 41 by the reader units 57a, 57b.

In view of the above, the dispensing device 100 according to this embodiment includes a storage space (for example, the saucer 143) to store the tobacco commodity 40d whose barcode 41 was not read in the housing 30. The saucer 143 is placed, for example, on the bottom plate section 31.

In the case of this embodiment, when the accommodation unit 10 is filled with the tobacco commodities 40, the barcodes 41 of these tobacco commodities 40 are scanned by the reader units 57a, 57b of the conveying unit 50, and a tobacco commodity 40d whose barcode 41 cannot be read exists, then the conveying unit 50 selectively withdraws the tobacco commodity 40d from the accommodation unit 10 to convey the tobacco commodity 40d to the saucer 143.

It should be noted that, as the mechanism of delivery of the tobacco commodity 40d from the conveying unit 50 to the saucer 143, for example, the mechanism that has been explained using Fig. 8A and Fig. 8B can be adopted.

Further, it is also preferable that the dispensing device 100 includes a notification unit that provides, to an operator, the notification about the fact that the tobacco commodity 40d whose barcode 41 cannot be read exists. The notification unit is configured to include either or both of an auditory notification unit such as a speaker performing auditory notification by sound and a visual notification unit such as a light-emitting member or a display device which provides visual notification by emission of light or indication.

When an operator has recognized the fact that the tobacco commodity 40d whose barcode 41 cannot be read exists, then the tobacco commodity 40d is input to the accommodation unit 10 again in the correct orientation and thereby the barcode 41 is allowed to be read by the reader unit 57a or 57b.

In the side wall section 32 of the housing 30, the portion near the region where the saucer 143 is arranged defines, for example, an opening/closing door 141. Specifically, the opening/closing door 141 is coupled via a hinge unit 142 to the portion in the side wall section 32 adjacent to the opening/closing door 141. In the example of Fig. 25, when the opening/closing door 141 is opened counterclockwise with the hinge unit 142 as a fulcrum, the opening/closing door 141 is thereby opened and the operator is allowed to insert his/her hand from the side of the housing 30 to take out the tobacco commodity 40d on the saucer 143.

It should be noted that a not-shown key is preferably provided in the opening/closing door 141 such that the opening/closing door 141 is maintained in a locked state where it cannot be opened.

As described above, the embodiments have been explained with reference to the drawings and they are exemplifications of the present invention and other various features can be adopted.

For example, in the above-described first and other embodiments, an example has been described where the column rows in the accommodation unit 10 are provided as the two rows of the first column row 10a and the second column row 10b while the number of the conveying units 50 provided in the dispensing device 100 is one, but the present invention is not limited to this example.

For example, four column rows may be provided in the accommodation unit 10 in parallel with each other, where the first conveying unit 50 is provided between the first and second column rows and the second conveying unit 50 is provided between the third and fourth column rows.

In this case, since each conveying unit 50 can individually perform withdrawal and conveyance of the tobacco commodity 40 from the accommodation unit 10, the speed of dispensing of tobacco commodities 40 at a time is improved.

As described above, the accommodation unit 10 includes a plurality of accommodation areas (in this example, the first accommodation area defined by the first and second column rows and the second accommodation area defined by the third and fourth column rows) arranged independently of each other and each being capable of accommodating multiple tobacco commodities 40. The dispensing device 100 can be configured to include a plurality of dispenser mechanisms (conveying unit 50) provided so as to correspond to each of the accommodation areas.

Also, in this case, it is preferable that the accommodation mechanism accommodates tobacco commodities 40 of a particular type (for example, tobacco commodities 40 of a top brand) in a distributed manner in two or more accommodation areas of these accommodation areas.

Also, in the foregoing, an example has been described where the reader unit reads the barcodes 41 from the individual tobacco commodities 40. Meanwhile, the reader unit may be configured to obtain images of the tobacco commodities 40 and optically determine the type (brand) of the tobacco commodities 40 through image authentication performed on the result of the imaging.

Also, the respective tobacco commodities 40 may have an IC tag that stores the identification information. In this case, the reader unit is configured to include an IC tag reader.

Also, in the above-described first and other embodiments, an example has been described where the conveying unit 50 holds the tobacco commodity 40 by the pair of arms arranged to be away from each other in the horizontal direction (the pair of first arm units 54 or the pair of second arm units 55) to withdraw it from the accommodation column 11, but the structure of the arms is not limited to this example. For example, the tobacco commodity 40 may be held from above and below by a pair of arms arranged to be away from each other in the up-and-down direction.

Also, when the tobacco commodities 40 are accommodated in the accommodation column 11 in a vertically stacked state, there is a possibility that the tobacco commodities 40 become unstable if a tobacco commodity 40 the first main surface 42 and second main surface 43 of which are of a relatively large dimension is stacked on a tobacco commodity 40 the first main surface 42 and second main surface 43 of which are of a relatively small dimension.

In view of the above, movement of the accommodation position of the tobacco commodity 40 accommodated in the accommodation unit 10 may be performed by the conveying unit 50 so that the tobacco commodity 40 the first main surface 42 and second main surface 43 of which are of a relatively small dimension is accommodated at an upper accommodation position of the accommodation column 11 as much as possible.

For example, the control unit 80 can determine the dimensions of the respective tobacco commodities 40 on the basis of the identification information that has been read by the reader unit and cause the conveying unit 50 to perform reordering of the tobacco commodities 40 in the accommodation column 11 on the basis of the result of the determination.

Alternatively, the control unit 80 can cause an imaging unit provided in the conveying unit 50 to obtain an image of the tobacco commodity 40, determine the dimensions of the respective tobacco commodities 40 on the basis of the result of the imaging, and cause the conveying unit 50 to perform reordering of the tobacco commodities 40 in the accommodation column 11 on the basis of the result of the determination.

The invention defines that the tobacco commodities 40 are accommodated in the accommodation column 11 in a vertically stacked state, and that the dispensing device includes a vibration unit configured to impart vibration to the tobacco commodity 40 at the time of withdrawal of the tobacco commodity 40 from the accommodation column 11 in order to suppress withdrawal of the adjacent tobacco commodities 40 above and below the tobacco commodity 40 that corresponds to the dispensing order when the tobacco commodity 40 that corresponds to the dispensing order is to be withdrawn from the accommodation column 11.

More specifically, for example, the conveying unit 50 includes the vibration unit. In more detail, the vibration unit is configured to cause the pair of arms provided in the conveying unit 50 to vibrate.

It is preferable that the vibration unit causes the tobacco commodity 40 to vibrate about the normal direction of the main surface (first main surface 42, second main surface 43) of the tobacco commodity 40 as the axis of vibration.

When the tobacco commodity 40 is held by the pair of arms and the tobacco commodity 40 is withdrawn from the accommodation column 11 while the tobacco commodity 40 is made to vibrate by the vibration unit, it is made possible to smoothly withdraw only the tobacco commodity 40 held by the pair of arms selectively from the accommodation column 11.

Also, when the tobacco commodities 40 are accommodated in the accommodation column 11 in a vertically stacked state, the tobacco commodities 40 that were stacked above the tobacco commodity 40 that corresponds to the dispensing order drop by one tier immediately after the tobacco commodity 40 that were stacked above the tobacco commodity 40 that corresponds to the dispensing order is withdrawn from the accommodation column 11, and these tobacco commodities 40 are stacked on the tobacco commodities 40 that were adjacent to and beneath the tobacco commodity 40 that corresponds to the dispensing order (see Fig. 5B and Fig. 5C, etc.).

At this point, there will be no problem if the tobacco commodity 40 that is dropping after having dropped is maintained horizontally. Meanwhile, a possibility may also be considered that at the time of dropping, the tobacco commodity 40 is caught on the partition wall 23, the spacer section 25, or the sidewall 24 and placed in an inclined state after having dropped.

In this case, when the reader units 57a, 57b attempt to read the barcode 41 to dispense the tobacco commodity 40 in accordance with the next dispensing order, the barcode 41 cannot be accurately read.

It is preferable that, in such a case, the dispensing device 100 is configured to notify the operator of the fact that an abnormality has occurred.

Also, in the foregoing, an example has been described where it is assumed that the restocking of the tobacco commodities 40 by the operator is performed such that the tobacco commodities 40 are neatly stacked but the present invention is not limited to this example.

For example, the dispensing device may include a hopper as an input section into which the tobacco commodity 40 is input and a conveyor configured to catch the tobacco commodities 40 sequentially moving downward from the hopper to convey them horizontally and the reader unit may be configured to read the identification information (barcode 41, etc.) from the tobacco commodity 40 in the process where the tobacco commodity 40 is conveyed by the conveyor.

Further, it is also preferable that the dispensing device includes an alignment mechanism configured to align the tobacco commodities 40 sequentially conveyed on the conveyor.

Further, it is also preferable that the dispensing device includes an accommodation mechanism configured to sequentially pick up the tobacco commodities 40 aligned on the conveyor to convey them toward the accommodation unit 10, and causes them to be accommodated by the accommodation unit 10.

Also, with regard to any operation of taking out the tobacco commodity 40 from the accommodation unit 10 by the conveying unit 50 for dispensing of the tobacco commodity 40 in the above-described embodiments, the same or similar operation can be adopted for the operation of taking out the tobacco commodity 40 from the accommodation unit 10 for moving the tobacco commodity 40 within the accommodation unit 10 (movement from the first accommodation unit to the second accommodation unit).

### (Reference Signs List)

10: accommodation unit
10a: first column row
10b: second column row
10c: movement area
11, 11a, 11b, 11c, 11d, 11e, 11f, 11g, 11h, 11i, 11j: accommodation column
12: support section
15: input section
16: first accommodation unit
17a: first accommodation area (accommodation area)
17b: second accommodation area (accommodation area)
17c: third accommodation area (accommodation area)
21: support base
21a: upper surface
22: support base
23: partition wall
24: sidewall
25: spacer section
30: housing
31: bottom plate section
32: side wall section
33: top plate section
34: hinge unit
35: take-out saucer
36: take-out slope
37: slope sidewall
38: take-out opening
40, 40a, 40b, 40c, 40d: tobacco commodity
41: barcode (identification information)
42: first main surface
43: second main surface
44: first side surface
45: second side surface
46: first end surface
47: second end surface
50: conveying unit
51: table-like section
52: ceiling section
53: side wall section
54: first arm unit
55: second arm unit
56: Z-direction moving unit
57a, 57b: reader unit
58: hinge unit
61: empty space
71: first ball screw
72: first rotation unit
73: first moving block
74: first guide rail
75: second ball screw
76: second rotation unit
77: second moving block
78: second guide rail
80: control unit
80a: CPU
80b: ROM
80c: RAM
81: dispensing order acquisition unit
82: X-drive motor
83: Z-drive motor
84: lid switch
85: table rotation motor
86a, 86b, 86c, 86d: arm drive motor
87a, 87b, 87c, 87d: arm drive solenoid
91: moving unit
92: suction nozzle
93, 94: pressing nozzle
95: elevator
96: first suction nozzle
97: second suction nozzle
98: third suction nozzle
100: dispensing device
110, 110a, 110b: air discharge wall
111, 112: air discharge hole
120, 121, 122: conveyor
130: dispensing unit
131: discharge nozzle
141: opening/closing door
142: hinge unit
143: saucer

## Claims

1. A dispensing device (100) installed in a store and used comprising:
an accommodation unit (10, 16) that accommodates tobacco commodities (40) of multiple types in a mixed state;
a housing in which the accommodation unit is arranged:
a reader unit (57a, 57b) that reads identification information (41) from each of the tobacco commodities (40);
a storage unit that stores the identification information of each of the tobacco commodities (40) in association with different accommodation position information for each of the tobacco commodities (40); and
a dispenser mechanism (50) that dispenses the tobacco commodity (40) of the type corresponding to the dispensing order from the accommodation unit (10, 16) with reference to the storage contents of the storage unit,
wherein the accommodation unit (10, 16) includes a plurality of accommodation columns (11, 11a to 11j) for accommodating a plurality of the tobacco commodities (40) in a vertically stacked state or in a state arranged in a vertical direction at intervals,
the tobacco commodities of multiple types are accommodated in a mixed state even in one single accommodation column, and
the accommodation position information includes height position information of each of the tobacco commodities,
the dispensing device further comprises a moving mechanism for moving the tobacco commodity to another accommodation position such that a plurality of accommodation positions in an empty state are placed in a vertically successively arranged state in one of the accommodation columns when a plurality of accommodation positions in an empty state exist in the accommodation unit,
wherein the accommodation column (11, 11a to 11j) accommodates the tobacco commodities (40) in the vertically stacked state, and
**characterized in that**
the dispensing device (100) includes a vibration unit for imparting vibration to the tobacco commodity (40) when the tobacco commodity (40) is dispensed from the accommodation column (11, 11a to 11j).

2. The dispensing device (100) according to claim 1, wherein
the accommodation column (11, 11a to 11j) has
a support base (21) that supports the tobacco commodity (40) of a lowest tier among the vertically stacked tobacco commodities (40) in a state of inclination and
a sidewall (24) standing upright from the support base (21) that regulates the falling of the tobacco commodity (40) in the downward direction of the inclination,
wherein an upper surface (21a) of the support base (21) defines the inclination that descends toward the sidewall (24), and
the tobacco commodity (40) corresponding to the dispensing order is taken out by the dispenser mechanism (50) from the accommodation column (11, 11a to 11j) from an upper side of the inclination.

3. The dispensing device (100) according to claim 2, wherein the dispenser mechanism (50) is configured to take out the tobacco commodity (40) from the accommodation column (11, 11a to 11j) upward along the inclination.

4. The dispensing device (100) according to claim 1, wherein the accommodation column is formed between two partition walls (23, 23a,23b), wherein the accommodation column (11, 11a to 11j) accommodates the tobacco commodities (40) in the state arranged in the vertical direction at intervals and has support sections (12) in multiple stages that support one or more of the tobacco commodities (40),
the support sections (12) are provided as pairs including a right one (12) and a left one (12),
a pair of the support sections (12) are provided on the partition wall (23, 23a, 23b) on both sides of the accommodation column (11, 11a to 11j) so as to protrude in the accommodation column (11, 11a to 11j).

5. The dispensing device (100) according to any one of claims 1 to 4, further comprising:
an input section (15) into which the tobacco commodity (40) is input; and
an accommodation mechanism for conveying the tobacco commodity (40) from the input section (15) and accommodating the tobacco commodity (40) in the accommodation unit (10, 16).

6. The dispensing device (100) according to claim 5, wherein the accommodation unit (10, 16) includes a plurality of accommodation areas (17a to 17c) arranged independently of each other and each capable of accommodate the tobacco commodities (40),
the dispensing device (100) includes a plurality of the dispenser mechanisms (50) each provided so as to correspond to the corresponding one of the accommodation areas (17a to 17c), and
the accommodation mechanism accommodates the tobacco commodities (40) of a particular type in a distributed manner into two or more of the accommodation areas (17a to 17c).

7. The dispensing device (100) according to any one of claims 1 to 6, wherein the accommodation unit (10, 16) includes a first accommodation unit and a second accommodation unit, and
the dispensing device (100) further comprises a moving mechanism (50) that moves the tobacco commodity (40) from the first accommodation unit to the second accommodation unit.

8. The dispensing device (100) according to claim 7, wherein the first accommodation unit is dedicated to storage of the tobacco commodities (40), and
the second accommodation unit accommodates the tobacco commodity (40) to be dispensed from the dispenser mechanism (50).

9. The dispensing device (100) according to claim 7 or 8, wherein the moving mechanism (50) moves the tobacco commodity (40) of a same type as that of the tobacco commodity (40) dispensed from the second accommodation unit by the dispenser mechanism (50) from the first accommodation unit to the second accommodation unit.

10. The dispensing device (100) according to any one of claims 7 to 9, wherein the first accommodation unit is an accommodation column (11d) accommodating the tobacco commodities (40) in a vertically stacked state, and
the accommodation column (11d) has:
a support section (21a) that supports the tobacco commodity (40) of a lowest tier among the vertically stacked tobacco commodities (40) in a state of inclination; and
a sidewall (24) that regulates the falling of the tobacco commodity (40) in the downward direction of the inclination, and
the tobacco commodity (40) is taken out by the moving mechanism (50) from the accommodation column (11d) from an upper side of the inclination.

11. The dispensing device (100) according to claim 10, wherein the moving mechanism (50) is configured to take out the tobacco commodity (40) from the accommodation column (11d) upward along the inclination.

12. The dispensing device (100) according to any one of claims 1 to 11, wherein the dispenser mechanism (50) includes a conveying unit (50) that is movable relative to the accommodation unit (10, 16) and that takes out the tobacco commodity (40) from the accommodation unit (10, 16) and conveys the tobacco commodity (40) .

13. The dispensing device (100) according to claim 12, wherein the conveying unit (50) includes the reader unit (57a, 57b).

## Patentansprüche

1. Ausgabevorrichtung (100), die in einem Warenhaus installiert und verwendet wird, umfassend:
eine Aufbewahrungseinheit (10, 16), die Tabakwaren (40) mehrerer Typen in einem gemischten Zustand aufbewahrt;
ein Gehäuse, in dem die Aufbewahrungseinheit angeordnet ist:
eine Leseeinheit (57a, 57b), die Identifizierungsinformationen (41) von jeder der Tabakwaren (40) liest;
eine Speichereinheit, die die Identifizierungsinformationen für jede der Tabakwaren (40) in Verbindung mit unterschiedlichen Aufbewahrungspositionsinformationen für jede der Tabakwaren (40) speichert; und
einen Ausgabemechanismus (50), der die Tabakware (40) des Typs, der dem Ausgabeauftrag entspricht, aus der Aufbewahrungseinheit (10, 16) mit Bezug auf den Speicherinhalt der Speichereinheit ausgibt,
wobei die Aufbewahrungseinheit (10, 16) eine Vielzahl von Aufbewahrungssäulen (11, 11a bis 11j) zur Aufbewahrung einer Vielzahl von Tabakwaren (40) in einem vertikal gestapelten Zustand oder in einem in einer vertikalen Richtung in Abständen eingerichteten Zustand einschließt,
die Tabakwaren mehrerer Typen in einem gemischten Zustand sogar in einer einzigen Aufbewahrungssäule aufbewahrt werden, und
die Aufbewahrungspositionsinformationen die Höhenlageinformationen jeder der Tabakwaren einschließen,
die Ausgabevorrichtung weiter einen Bewegungsmechanismus zum Bewegen der Tabakware zu einer anderen Aufbewahrungsposition umfasst, derart, dass eine Vielzahl von Aufbewahrungspositionen in einem leeren Zustand in einem vertikal aufeinanderfolgend eingerichteten Zustand in einer der Aufbewahrungssäulen platziert werden, wenn eine Vielzahl von Aufbewahrungspositionen in einem leeren Zustand in der Aufbewahrungseinheit vorliegt,
wobei die Aufbewahrungssäule (11, 11a bis 11j) die Tabakwaren (40) im vertikal gestapelten Zustand aufbewahrt, und
**dadurch gekennzeichnet, dass** die Ausgabevorrichtung (100) eine Vibrationseinheit einschließt, um die Tabakware (40) in Vibration zu versetzen, wenn die Tabakware (40) von der Aufbewahrungssäule (11, 11a bis 11j) ausgegeben wird.

2. Ausgabevorrichtung (100) nach Anspruch 1, wobei
die Aufbewahrungssäule (11, 11a bis 11j)
eine Trägerbasis (21), die die Tabakware (40) einer untersten Schicht unter den vertikal gestapelten Tabakwaren (40) in einem Neigungszustand trägt, und
eine von der Trägerbasis (21) aufrecht stehende Seitenwand (24) aufweist, die das Fallen der Tabakware (40) in der Abwärtsrichtung der Neigung reguliert,
wobei eine obere Oberfläche (21a) der Trägerbasis (21) die Neigung definiert, die zur Seitenwand (24) hin abfällt, und
die dem Ausgabeauftrag entsprechende Tabakware (40) durch den Ausgabemechanismus (50) aus der Aufbewahrungssäule (11, 11a bis 11j) von einer oberen Seite der Neigung entnommen wird.

3. Ausgabevorrichtung (100) nach Anspruch 2, wobei der Ausgabemechanismus (50) konfiguriert ist, um die Tabakware (40) aus der Aufbewahrungssäule (11, 11a bis 11j) aufwärts entlang der Neigung zu entnehmen.

4. Ausgabevorrichtung (100) nach Anspruch 1, wobei die Aufbewahrungssäule zwischen zwei Trennwänden (23, 23a, 23b) ausgebildet ist, wobei die Aufbewahrungssäule (11, 11a bis 11j) die Tabakwaren (40) in dem in der vertikalen Richtung in Abständen eingerichteten Zustand aufbewahrt und Trägerbereiche (12) in mehreren Stufen aufweist, die eine oder mehrere der Tabakwaren (40) tragen,
die Trägerbereiche (12) paarweise bereitgestellt sind, die einen rechten (12) und einen linken (12) Bereich einschließen,
ein Paar der Trägerbereiche (12) an der Trennwand (23, 23a, 23b) auf beiden Seiten der Aufbewahrungssäule (11, 11a bis 11j) bereitgestellt sind, sodass sie in der Aufbewahrungssäule (11, 11a bis 11j) herausragen.

5. Ausgabevorrichtung (100) nach einem der Ansprüche 1 bis 4, weiter umfassend:
einen Eingabebereich (15), in den die Tabakware (40) eingegeben wird; und
einen Aufbewahrungsmechanismus zum Befördern der Tabakware (40) aus dem Eingabebereich (15) und zum Aufbewahren der Tabakware (40) in der Aufbewahrungseinheit (10, 16).

6. Ausgabevorrichtung (100) nach Anspruch 5, wobei die Aufbewahrungseinheit (10, 16) eine Vielzahl von Aufbewahrungsbereichen (17a bis 17c) einschließt, die unabhängig voneinander eingerichtet sind und jeweils in der Lage sind, die Tabakwaren (40) aufzubewahren,
die Ausgabevorrichtung (100) eine Vielzahl der Ausgabemechanismen (50) einschließt, die jeweils so bereitgestellt sind, dass sie einem der entsprechenden Aufbewahrungsbereiche (17a bis 17c) entsprechen, und
der Aufbewahrungsmechanismus die Tabakwaren (40) eines bestimmten Typs in verteilter Weise in zwei oder mehr der Aufbewahrungsbereiche (17a bis 17c) aufbewahrt.

7. Ausgabevorrichtung (100) nach einem der Ansprüche 1 bis 6, wobei die Aufbewahrungseinheit (10, 16) eine erste Aufbewahrungseinheit und eine zweite Aufbewahrungseinheit einschließt, und
die Ausgabevorrichtung (100) weiter einen Bewegungsmechanismus (50) umfasst, der die Tabakware (40) von der ersten Aufbewahrungseinheit zu der zweiten Aufbewahrungseinheit bewegt.

8. Ausgabevorrichtung (100) nach Anspruch 7, wobei die erste Aufbewahrungseinheit für die Lagerung der Tabakwaren (40) vorgesehen ist, und
die zweite Aufbewahrungseinheit die Tabakware (40) aufbewahrt, die von dem Ausgabemechanismus (50) ausgegeben werden soll.

9. Ausgabevorrichtung (100) nach Anspruch 7 oder 8, wobei der Bewegungsmechanismus (50) die Tabakware (40) eines gleichen Typs wie die von der zweiten Aufbewahrungseinheit durch den Ausgabemechanismus (50) ausgegebene Tabakware (40) von der ersten Aufbewahrungseinheit zur zweiten Aufbewahrungseinheit bewegt.

10. Ausgabevorrichtung (100) nach einem der Ansprüche 7 bis 9, wobei die erste Aufbewahrungseinheit eine Aufbewahrungssäule (11d) ist, die die Tabakwaren (40) in einem vertikal gestapelten Zustand aufbewahrt, und
die Aufbewahrungssäule (11d) Folgendes aufweist:
einem Trägerbereich (21a), der die Tabakware (40) einer untersten Schicht unter den vertikal gestapelten Tabakwaren (40) in einem Neigungszustand trägt; und
eine Seitenwand (24), die das Fallen der Tabakware (40) in der Abwärtsrichtung der Neigung reguliert, und
die Tabakware (40) durch den Bewegungsmechanismus (50) aus der Aufbewahrungssäule (11d) von einer Oberseite der Neigung entnommen wird.

11. Ausgabevorrichtung (100) nach Anspruch 10, wobei der Bewegungsmechanismus (50) konfiguriert ist, um die Tabakware (40) aus der Aufbewahrungssäule (11d) aufwärts entlang der Neigung zu entnehmen.

12. Ausgabevorrichtung (100) nach einem der Ansprüche 1 bis 11, wobei der Ausgabemechanismus (50) eine Beförderungseinheit (50) einschließt, die relativ zur Aufbewahrungseinheit (10, 16) beweglich ist und die die Tabakware (40) aus der Aufbewahrungseinheit (10, 16) entnimmt und die Tabakware (40) befördert.

13. Ausgabevorrichtung (100) nach Anspruch 12, wobei die Beförderungseinheit (50) die Leseeinheit (57a, 57b) einschließt.

## Revendications

1. Dispositif de distribution (100) installé dans un magasin et utilisé comprenant :
une unité d'accueil (10, 16) qui accueille des articles de tabac (40) de multiples types dans un état mélangé ;
un logement dans lequel l'unité d'accueil est agencée :
une unité de lecture (57a, 57b) qui lit des informations d'identification (41) de chacun des articles de tabac (40) ;
une unité de stockage qui stocke les informations d'identification de chacun des articles de tabac (40) en association avec différentes informations de position d'accueil pour chacun des articles de tabac (40) ; et
un mécanisme de distribution (50) qui distribue les articles de tabac (40) du type correspondant à l'ordre de distribution depuis l'unité d'accueil (10, 16) en référence aux contenus de stockage de l'unité de stockage,
dans lequel l'unité d'accueil (10, 16) inclut une pluralité de colonnes d'accueil (11, 11a à 11j) pour accueillir une pluralité d'articles de tabac (40) dans un état d'empilement vertical ou dans un état agencé dans une direction verticale à des intervalles,
les articles de tabac de multiples types sont accueillis dans un état mélangé même dans une seule colonne d'accueil, et
les informations de position d'accueil incluent des informations de position de hauteur de chacun des articles de tabac,
le dispositif de distribution comprend en outre un mécanisme de déplacement pour déplacer l'article de tabac vers une autre position d'accueil de sorte qu'une pluralité de positions d'accueil dans un état vide soient placées dans un état d'agencement successif vertical dans l'une des colonnes d'accueil lorsqu'une pluralité de positions d'accueil dans un état vide existe dans l'unité d'accueil,
dans lequel la colonne d'accueil (11, 11a à 11j) accueille les articles de tabac (40) dans l'état d'empilement vertical, et
**caractérisé en ce que** le dispositif de distribution (100) inclut une unité de vibration pour appliquer une vibration à l'article de tabac (40) lorsque l'article de tabac (40) est distribué depuis la colonne d'accueil (11, 11a à 11j).

2. Dispositif de distribution (100) selon la revendication 1, dans lequel
la colonne d'accueil (11, 11a à 11j) présente
une base de support (21) qui supporte l'article de tabac (40) d'un niveau le plus bas parmi les articles de tabac (40) empilés verticalement dans un état d'inclinaison et
une paroi latérale (24) montant verticalement à partir de la base de support (21) qui régule la chute de l'article de tabac (40) dans la direction vers le bas de l'inclinaison,
dans lequel une surface supérieure (21a) de la base de support (21) définit l'inclinaison qui descend vers la paroi latérale (24), et
l'article de tabac (40) correspondant à l'ordre de distribution est sorti par le mécanisme de distribution (50) de la colonne d'accueil (11, 11a à 11j) depuis un côté supérieur de l'inclinaison.

3. Dispositif de distribution (100) selon la revendication 2, dans lequel le mécanisme de distribution (50) est configuré pour sortir l'article de tabac (40) de la colonne d'accueil (11, 11a à 11j) vers le haut le long de l'inclinaison.

4. Dispositif de distribution (100) selon la revendication 1, dans lequel la colonne d'accueil est formée entre deux parois de séparation (23, 23a, 23b), dans lequel la colonne d'accueil (11, 11a à 11j) accueille les articles de tabac (40) dans l'état agencé dans la direction verticale à des intervalles et présente des sections de support (12) à de multiples étages qui supportent un ou plusieurs des articles de tabac (40),
les sections de support (12) sont prévues en paires incluant une section droite (12) et une section gauche (12),
une paire des sections de support (12) est prévue sur la paroi de séparation (23, 23a, 23b) des deux côtés de la colonne d'accueil (11, 11a à 11j) de manière à faire saillie dans la colonne d'accueil (11, 11a à 11j).

5. Dispositif de distribution (100) selon l'une quelconque des revendications 1 à 4, comprenant en outre :
une section d'entrée (15) dans laquelle l'article de tabac (40) est entré ; et
un mécanisme d'accueil pour transporter l'article de tabac (40) depuis la section d'entrée (15) et accueillir l'article de tabac (40) dans l'unité d'accueil (10, 16).

6. Dispositif de distribution (100) selon la revendication 5, dans lequel l'unité d'accueil (10, 16) inclut une pluralité de zones d'accueil (17a à 17c) agencées indépendamment l'une de l'autre et capables chacune d'accueillir les articles de tabac (40),
le dispositif de distribution (100) inclut une pluralité des mécanismes de distribution (50) prévus chacun de manière à correspondre à l'une correspondante des zones d'accueil (17a à 17c), et
le mécanisme d'accueil accueille les articles de tabac (40) d'un type particulier d'une manière répartie dans deux ou plus des zones d'accueil (17a à 17c).

7. Dispositif de distribution (100) selon l'une quelconque des revendications 1 à 6, dans lequel l'unité d'accueil (10, 16) inclut une première unité d'accueil et une seconde unité d'accueil, et
le dispositif de distribution (100) comprend en outre un mécanisme de déplacement (50) qui déplace l'article de tabac (40) de la première unité d'accueil vers la seconde unité d'accueil.

8. Dispositif de distribution (100) selon la revendication 7, dans lequel la première unité d'accueil est dédiée au stockage des articles de tabac (40), et
la seconde unité d'accueil accueille l'article de tabac (40) à distribuer depuis le mécanisme de distribution (50).

9. Dispositif de distribution (100) selon la revendication 7 ou 8, dans lequel le mécanisme de déplacement (50) déplace l'article de tabac (40) d'un même type que celui de l'article de tabac (40) distribué depuis la seconde unité d'accueil par le mécanisme de distribution (50) depuis la première unité d'accueil vers la seconde unité d'accueil.

10. Dispositif de distribution (100) selon l'une quelconque des revendications 7 à 9, dans lequel la première unité d'accueil est une colonne d'accueil (11d) accueillant les articles de tabac (40) dans un état d'empilement vertical, et
la colonne d'accueil (11d) présente :
une section de support (21a) qui supporte l'article de tabac (40) d'un niveau le plus bas parmi les articles de tabac (40) empilés verticalement dans un état d'inclinaison ; et
une paroi latérale (24) qui régule la chute de l'article de tabac (40) dans la direction vers le bas de l'inclinaison, et
l'article de tabac (40) est sorti par le mécanisme de déplacement (50) de la colonne d'accueil (11d) depuis un côté supérieur de l'inclinaison.

11. Dispositif de distribution (100) selon la revendication 10, dans lequel le mécanisme de déplacement (50) est configuré pour sortir l'article de tabac (40) de la colonne d'accueil (11d) vers le haut le long de l'inclinaison.

12. Dispositif de distribution (100) selon l'une quelconque des revendications 1 à 11, dans lequel le mécanisme de distribution (50) inclut une unité de transport (50) qui est mobile par rapport à l'unité d'accueil (10, 16) et qui sort l'article de tabac (40) de l'unité d'accueil (10, 16) et transporte l'article de tabac (40).

13. Dispositif de distribution (100) selon la revendication 12, dans lequel l'unité de transport (50) inclut l'unité de lecture (57a, 57b).
